# EUROPEAN PATENT APPLICATION

(11) **EP 2 500 072 A1**
(43) Date of publication of application: **19.09.2012**
(21) Application number: 11158191.4
(22) Date of filing: 15.03.2011
(51) Int. Cl.: B01D 9/00

(54) **A novel process of residual solvent removal**

(71) Applicant: LEK Pharmaceuticals d.d., 1526 Ljubljana (SI)
(72) Inventor: The designation of the inventor has not yet been filed
(74) Representative: Kunic Tesovic, Barbara

(57) **Abstract**

The present invention relates to the field of chemical technology, more specifically to a novel and effective way of residual solvent removal comprising the application of ultrasonic treatment.

## Description

### Field of the Invention

The present invention relates to the field of chemical technology, more specifically to a novel and effective way of residual solvent removal.

### Background of the Invention

Organic solvents are frequently used during processing of chemical materials, and subsequent removal of solvents is one of key steps for the production of pure chemical products. Drying is typically used, but in some cases it is difficult to remove residual solvents by drying especially if solid material is amorphous, or when particles are obtained that are big, irregular and agglomerated. Furthermore, efficient removal or organic solvents by drying is often hampered by thermal instability of the desired chemical product

In pharmacy the level of residual organic solvents is strictly regulated by guidelines and the level should be limited to the prescribed values especially if a solvent belongs to ICH groups 1 or 2.

There is still a need, and hence it is an object of the present invention to develop an efficient process for removal of residual solvents, especially in case of active pharmaceutical ingredients.

### Summary of the invention

Aspects, advantageous features and preferred embodiments of the present invention summarized in the following items, respectively alone or in combination, contribute to solving this and other objects of the invention:
1. A process for the preparation of solid chemical compound purified from residual solvent, the process comprising the steps of
   a) use of said solvent or a mixture of said solvent for providing a solution of the chemical compound,
   b) subjecting said solution of step a) to precipitation or crystallisation, including a precipitation or crystallisation phase during which the solution of the chemical compound is subjected to ultrasonic treatment, wherein solid precipitates or crystals of the chemical compound in the form of particles are obtained,
   c) separating or isolating solid precipitate or crystal particles from a liquid phase obtained from the solution treatment step b), and
   d) drying the solid separated or isolated precipitate or crystal particles.
      The term "purified from residual solvent" used herein means that a solid chemical compound is made pure or freed from, or cleansed of, a solvent which had previously been associated with or contacted with the chemical compound, for example because the solvent was used in processing the chemical compound such as in any reaction, any synthesis, any prior precipitation or crystallization, or any other situation where the chemical compound came into contact with the solvent, wherein the "solvent" can be a single solvent or a solvent mixture.
      It has been surprisingly found that removal of residual solvent is remarkably enhanced if drying is combined in advance with an ultrasonic treatment during an entire or a part of the period of precipitation or crystallization. In order to make the ultrasonic treatment/drying combination particularly effective, the ultrasonic treatment is preferably applied during an appropriate period of precipitation or crystallization sufficient to allow a relatively slow and controlled precipitation or crystallisation process in the solution, and then not before the solid material in the form of precipitate or crystal particles is separated or isolated from the liquid phase, the drying step is performed. The latter steps c) and d) makes the process of the present invention significantly distinct from applying full evaporation techniques, such as a spray drying or fluid bed drying treatment, directly to a solution or a liquid phase thereof, respectively containing the chemical compound. According to the invention, applying ultrasonic treatment during at least a part of the precipitation or crystallisation phase prior to separation/isolation of solid material makes the subsequent solvent removal by drying significantly more efficient compared to a process of precipitation at the same physical conditions, but without ultrasonic treatment. It is possible that by the special combination process according to the invention, the amount residual organic solvent can be reduced to a lower level independently or additionally to a beneficially achievable particle size control, especially a desirable particle size reduction.
      Preferably, the process according to the present invention can be applied, if desired, to an end point of drying when no further substantial weight loss or no further substantial decrease in residual solvent level is observed, more preferably and illustratively defined by not further reducible residual solvent by more than 15%, in particular by not more than 10% relative to a previously measured reference amount within a reasonable period of time of e.g. 1 hour at the respectively applied drying conditions. Thereby, a very desirable low solvent amount which cannot be further reduced by normal drying, or which cannot be further reduced even by harsh drying conditions without degrading the processed chemical compound, can be achieved. In a preferred embodiment, low amount of residual solvent in a solid chemical compound is achieved when the amount of residual solvent is at most as defined in ICH Q3C standard as valid in the year 2010 of the corresponding organic solvent. Low amount of residual solvent in turn combines well with otherwise excellent purity characteristics attained with the process in terms of essential lack of compound-related impurities (e.g. lower than 1 %, preferably lower than 0.5 %, more preferably lower than 0.1 %, respectively measured by HPLC) with minimization or virtual absence of residual solvents. Further advantageously, substantial or almost complete or total lack of compound-related impurities can be pre-prepared, or can beneficially be induced by the purification capacity of the precipitation or crystallization process of the present invention and is effected owing to reducing degradation of the compound, because the process allows to apply shorter drying periods and/or lower temperature of drying as a result of easier removal of residual solvents after the ultrasonic treatment as specified.
      Hence ultrasonic treatment has surprisingly been found to remarkably contribute to a solvent removal effect in the process as defined in item 1 above. As a useful additional result, particle size of the particulate chemical compound can be advantageously controlled at the same time as residual solvent is finally removed.
2. The process according to item 1, wherein the residual solvent to be removed is an organic solvent, which organic solvent had been used for providing the solution of step a), optionally in a mixture of said organic solvent with another solvent such as water or an aqueous solution.
   It has been found that the process according to the present invention is particularly suited for organic solvent based systems, to thereby effectively removing the organic solvent from the microsurrounding of the chemical compound through the careful sonification process during precipitation or crystallisation, limiting the possibility of deep inclusion of solvent molecules into the particle.
3. The process according to any one of the preceding items, wherein the chemical compound had been pre-dried prior to being provided in solution or suspension in step a). According to preferred embodiments, the removal of residual solvents is surprisingly more enhanced if chemical compound had been previously dried.
4. The process according to any one of the preceding items, wherein step b) comprises performing ultrasonic treatment during a nucleation phase when small precipitates or crystals start to be formed, and preferably further ultrasonic treatment is applied, optionally with intermediate period(s) when no ultrasonic treatment is(are) applied.
5. The process according to any one of the preceding items, wherein during the precipitation or crystallisation phase of step b), the solution of the chemical compound is subjected to continuous ultrasonic treatment for at least 5 minutes, preferably for at least 30 minutes, more preferably for at least 1 hour.
6. The process according to any one of items 1 to 4, wherein during the precipitation or crystallisation phase of step b), the solution of the chemical compound is subjected to at least one cycle of flow-cell ultrasound treatment.
   The embodiments of items 5 and 6 allows to carefully control the period of precipitation or crystallization, in particular in a manner to allow a slow and controlled precipitation or crystallisation process in the solution. This in turn provides for limiting the possibility of deep inclusion of solvent molecules into the particle.
7. The process according to any one of the preceding items, wherein the precipitation or crystallisation phase of step b) is caused or triggered by a technique selected from the group consisting of (i) cooling, (ii) addition of an antisolvent, (iii) changing pH, (iv) changing ion concentration, (v) addition of a complex ion, (vi) triggering polymerization; or any combination thereof, particularly any one of (ii) to (vi) combined with cooling.
   In order to determine the proper respective condition to cause or trigger the precipitation or crystallization, respective process settings can be found and adapted accordingly by considering conditions when the chemical compound does not precipitate or crystallize, compared to what triggers its precipitation or crystallization. For example in the case of precipitating or crystallizing by an antisolvent, a high temperature, preferably higher than room temperature can be equated with having substantially only first solvent present that dissolves the chemical compound, and a low temperature, such as room temperature or below, with having antisolvent already added to cause precipitation or crystallization.
   The term "room temperature" as used herein denotes any temperature between 20 to 25°C, preferably is 25°C.
8. The process according to any one of the preceding items, wherein ultrasonic treatment is performed in the precipitation or crystallisation phase of step b) during at least a part of the cooling period from a relatively high first temperature of the solution to a lower temperature at which solid precipitates or crystals of the chemical compound in the form of particles are formed, as well as during a subsequent maintenance period at a lower temperature, optionally with intermediate period(s) when no ultrasonic treatment is(are) applied.
   According to preferred embodiments as set forth in any one of items 4 to 8, the removal of residual solvents is remarkably further enhanced when ultrasonic treatment is performed at various beneficial process schemes. The effect is particularly enhanced when the solvent system is in a supersaturated phase, or when precipitates or crystals just start to be formed. It is believed that this phase is particular critical to control structural arrangement of both the chemical compound molecule and the solvent molecule, possibly to avoid or minimize deep inclusion of solvent molecules into the ongoing formation of compound particles, which deeply included solvent molecules later are hard to remove again by drying. Such critical phase can be determined, if desired in advance, for a given system (which is essentially defined by the type of solvent or solvent mixture used, and possibly further physical conditions). A supersaturated phase or a nucleation zone can be determined by suitable methods in advance as a reference method or during an ongoing process actually performed to produce the chemical compound. When thermal precipitation or crystallisation is performed according to a very suitable process principle, hence a nucleation temperature range can be determined.
   According to a preferred embodiment, optionally with intermediate absence of ultrasonic treatment, ultrasonic treatment can be further continued after nucleation phase. For example, when thermal precipitation or crystallisation is performed, it can be continued during or after a cooling phase, again with optional intermittent absence of ultrasonic treatment. In this manner, possible reagglomeration of small precipitate or crystal particles and thus enhanced strong inclusion of solvent molecules into solid product material can be avoided. It has been found particularly effective to preferably perform additional ultrasonic treatment at low temperature, preferably at the final temperature of solid material separation/isolation, preferably at a temperature below 10°C, more preferably at a temperature below 5°C.
9. The process according to any one of the preceding items, comprising performing ultrasonic treatment at phases of during cooling from higher temperature status of the solution;
   optionally during intermediately maintaining a temperature level between said higher temperature status and room temperature; and
   during a phase of at least 5 minutes, preferably at least 30 minutes, more preferably at least 1 hour, at low temperature below room temperature, preferably at a temperature below 10°C, more preferably at a temperature below 5°C;
   optionally with intermediate absence of ultrasonic treatment during a part of a respective phase or between respective phases.
10. The process according to any one of the preceding items, the process comprising thermal recrystallisation including the steps of:
   a') dissolving a crude, dried starting material of the chemical compound in the solvent or a mixture of said solvent at elevated temperature to provide a solution, and obtaining a clear solution,
   b') cooling said clear solution provided in step a') and applying ultrasonic treatment at least during nucleation phase when small precipitates or crystals start to be formed, and, optionally with intermediate absence of ultrasonic treatment, continuing further ultrasonic treatment during cooling,
   c') separating the precipitates or crystals, and
   d') drying the solid precipitates or crystals at reduced pressure.
      The preferred embodiments of items 9 and 10 are beneficially influenced by the circumstances explained further above, especially for the event that thermal precipitation or crystallisation is performed according to a useful process principle where precipitation and crystallisation can be reliably controlled.
11. The process according to any one of the preceding items, wherein step a) provides for a clear solution of the chemical compound in the solvent or solvent mixture prior to the precipitation or crystallisation phase.
12. The process according to any one of the preceding items, wherein any undissolved solid particles is avoided or removed prior to to the precipitation or crystallisation phase and prior to the nucleation phase, preferably prior to a cooling step.
   In preferred embodiments according to items 11 and 12, especially when the process includes a thermal (re)crystallisation process, the provision of a clear solution in step a) may turn out to be critical, as any remaining solids prior to step b) may lead to a too fast or a too uncontrolled precipitation or crystallisation and thus may lead to deeply included or occluded solvent molecules in the finally precipitated or crystallized particles in spite of the ultrasonic treatment.
   If not already provided by a selection of an appropriate solvent, suitable means to provide clear solution prior to the start of crystallization include, but are not limited to, in case of solvent mixtures dissolving first in the more solubilising solvent with further adding the cosolvent instead of dissolving in a prepared mixture; adding preheated co-solvents if used; applying high temperature, at least exceeding the nucleation zone, but preferably applying refluxing status for step a); and filtering the hot solution to remove any undissolved solid particles.
13. The process according to any one of the preceding items, wherein step b) includes thermal precipitation or crystallisation, and cooling is performed at a cooling rate of slower than -25°C/h.
   This preferred embodiment, directed to reliable thermal precipitation or crystallisation, contributes by slow cooling to a slow and controlled precipitation or crystallisation process. It is believed that it assists thereby the activity of ultrasound in the critical phase of particle formation without or with reduced degree of incorporation of solvent molecules into the precipitating or crystallising solid compound particle.
14. The process according to any one of the preceding items, wherein the separation or isolation step c) is performed without substantial evaporation, preferably is performed by filtration.
15. The process according to any one of the preceding items, wherein the drying the solid precipitates or crystals is performed by conditions of one or more of (selected from)
   (i) applying reduced pressure of 100 mbar or below, preferably 50 mbar or below, more preferably 20 mbar or below,
   (ii) drying temperature of at least 20 °C
   (iii) drying time of at least 8 h, preferably at least 12 h, more at least 24 h.
      It has been found that prior application of ultrasound treatment well prepares the solid compound particles in a manner that appropriate drying conditions can strongly enhance residual solvent removal at an extend which may not or only hardly possible by drying alone.
      Further, the process of the present invention allows to achieve minimum contents of residual solvent yet with relatively smooth drying conditions, which is particularly favorable when treating temperature-sensitive chemical compounds and thereby reducing the level of not only the residual solvent, but also of heat-derived impurities. Standard tests to define whether a chemical compound such as a pharmaceutically active ingredient/drug is temperature-sensitive or not are known and can be applied prior to using the process according to the present invention. As an example, reference can be made to temperature-sensitive compounds defined according to ICH Q1A.
16. The process according to any one of the preceding items, wherein the chemical compound is an active pharmaceutical ingredient, yielding the chemical compound as crystalline material.
   The process according to the present invention is particularly useful during the preparation and processing of a crystalline active pharmaceutical ingredient, eventually yielding residual solvent levels which may still be detectable but which are extremely low.
17. The process according to any one of the preceding items, wherein the chemical compound is an active pharmaceutical ingredient, yielding the chemical compound as amorphous material.
   Likewise, the process according to the present invention is also useful during the preparation and processing of an amorphous active pharmaceutical ingredient, again allowing to yield residual solvent levels which may still be detectable but which are extremely low. In order to achieve enhanced properties of the product, attention to make crystalline rather than amorphous material is, however, generally preferred.
18. The process according to any one of the preceding items, wherein amount of residual solvent in the dried solid precipitate or crystal particles is reduced to a level of 750 ppm or lower, preferably 500 ppm or lower, more preferably 450 ppm or lower.
   Depending on carefully selected conditions during ultrasound treatment, it is possible to reduce residual solvent to an extremely low level as indicated, even in a large scale format, for example relative to kilogram amounts (e.g. 2 kg) of solid precipitate or crystal particles. This is particularly advantageous in case of organic solvents, all the more when present in active pharmaceutical ingredients. Residual solvent levels can be suitably measure for example by gas chromatography.
19. The process according to any one of the preceding items, wherein the solvent is an organic solvent, and wherein the amount residual organic solvent is reduced to a maximal amount defined by ICH Q3C standard of the corresponding organic solvent.
   One of the great advantages of the present invention is that even in difficult cases of the chemical compound having residual organic solvent amounts, extremely low levels satisfying the ICH Q3C standard of the corresponding organic solvent may be achieved. Desirable upper concentration limits (ppm), which shall be satisfied after applying the process according to the present invention depending on the remaining organic solvent, are set forth in Tables 1 and 2 below.
20. The process according to any one of the preceding items, wherein the chemical compound provided for step a) is a crude starting material, while the solid chemical compound in the final precipitate or crystal form has a purity of at least 99% (HPLC).
   The process according to the present invention can be included in a particularly useful manner when forming a part of a recrystallisation process, wherein the crude starting material may be obtained in a prior synthesis route to be purified by recrystallisation.
   Also in this context it is again noted that the benefit of enabling more easy removal of residual solvent by ultrasonic treatment prior to drying, compared to drying alone, allows to preferably adopt less harsh drying conditions in cases when the chemical compound to be prepared may be instable, especially if thermo-labile, this meaning that cases are beneficially addressed where the balance of purity criteria and thus meeting very low residual solvents (such as satisfying the ICH Q3C standard) and still maintaining high compound purity cannot or hardly be fulfilled by conventional methods such as drying, because harsh drying or other conditions may otherwise likely decompose the chemical compound. These circumstances are particularly important in case of treating active pharmaceutical ingredients.
21. The process according to any one of the preceding items, for the preparation of a scaled-up level of the chemical compound in amounts of gram or kilogram quantities (e.g. in a range from at least one gram or at least one kilogram, to a multitude of grams or kilograms respectively), and/or wherein ten or tens to hundred or hundreds of liters of solvent or solvent mixture is used for step a). A further advantage by the present invention resides in that a remarkable residual solvent removal can be achieved even at a scale-up level of a preparation system, in which situations solvent removal is particularly difficult.
22. A process for the preparation of a solid chemical compound purified from residual solvent, the process comprising the steps of
   a) use of said solvent or a mixture of said solvent for providing a suspension of the chemical compound,
   b) subjecting said suspension of step a) to ultrasonic treatment, wherein the chemical compound is obtained in the form of particles, and
   c) separating or isolating solid particles from a liquid phase obtained from the solution treatment step b), and
   d) drying the separated or isolated solid particles.
      As a further advantage, the process of the present invention to reduce the amount of residual solvent, especially a lower amount when compared to using drying, is also useful when applied to suspension systems. Likewise it is important that ultrasonic treatment is applied to the suspension state during at least a certain and time-controlled period. Accordingly, the preferred features set forth in any one of the preceding items 2 to 21 can likewise be advantageously also applied in the present embodiment.
23. A process for preparing an active pharmaceutical ingredient or a pharmaceutical composition comprising the same, the process comprising the steps of:
   carrying out a process according to any one of the preceding items, wherein the active pharmaceutical ingredient is said solid chemical compound, and
   optionally mixing the obtained, dried solid precipitates, crystals or particles with at least one pharmaceutically acceptable excipient to obtain a pharmaceutical composition.
24. Use of an ultrasonic treatment for reducing residual solvent in a solid chemical material.
   Owing to the findings according to the present invention, ultrasonic treatment can now be used to achieve a new effect, thereby providing a new method for satisfying the need of efficient residual solvent removal, for example for cases where only very simple drying is desired or when even no drying is desired or needed at all.
   The aforementioned use can be beneficially combined with a drying step, independent and distinct from mere solvent evaporation processes, which combination is particularly useful in cases when ultimate minimization of residual solvent is desired or needed; or when the chemical material is temperature-sensitive because the combination process allows to apply shorter drying periods and/or lower temperature of drying as a result of easier removal of residual solvents after the ultrasonic treatment as specified, and thereby significantly contributes to reducing degradation of the compound.
25. Use according to item 24, wherein the solid chemical material is a crystalline active pharmaceutical ingredient.
   This use relates to a particularly relevant application, given the fact that solvent removal is particularly critical in such applications, for example for satisfying ICH Q3C standard of the corresponding organic solvent.
26. Use according to item 24 or 25, wherein the ultrasonic treatment is applied during a recrystallisation process of a solid active pharmaceutical ingredient material using the solvent as a solvent or antisolvent during recrystallisation, in particular when the solvent is an organic solvent or antisolvent.
   According to this preferred use, the ultrasonic treatment can be suitably and efficiently incorporated into a recrystallisation process of a solid active pharmaceutical ingredient material, thereby combining increase of purities by choosing an appropriate recrystallisation solvent depending on the desired compound and the skilled persons knowledge thereof, and by concurrently further lowering residual amount of the chosen solvent in the final product.
27. Use according to item 24, wherein solid chemical material is an amorphous active pharmaceutical ingredient.
   As the ultrasonic treatment can also be used to reduced residual solvent amount after precipitation of amorphous material, the present invention can be beneficially applied also to such solid materials.

### Detailed description of the invention

Ultrasound is cyclic sound pressure with a frequency greater than the upper limit of human hearing, which is approximately 20 kilohertz (20,000 hertz). The production of ultrasound is used in many different fields, sonochemistry represents its application in chemical processes.

Recently the use of ultrasound in chemistry (sonochemistry) has been becoming a method for various applications. The most outstanding influence of ultrasound on matter is shown on liquids in which ultrasonic waves cause cavitation. Tiny areas of hyperheating and hyperpressuring can bring molecules together and consequently influence chemical reactions, they produce accelerated and more homogenous nucleation in particles formation during precipitation, while miniexplosions of hyperpressured bubbles in the contact of solid surface have abrasive effect (Cains et al. in Org. Proc. Res. Dev., 1998, 2, 34-48). Such phenomena is applied for producing small crystals by stirring under ultrasonic irradiation (US 6960256, US 7326294) or by introducing solution aerosols produced by ultrasound into antisolvent (WO 04/073827), for producing uniform crystals (US 6589500), for grinding particles in suspension (US 6669122).

Ultrasonic irradiation in a chemical process can be continuous or pulsing, it can be applied at the beginning of a process (for instance nucleation), several times with interruptions, or through the whole process without interruptions. Frequency can be stable or can be changed during the process (US 7357835). Depending on the regime of the process one can design particle size. The overall result is usually a more homogeneous particle distribution, smaller and less agglomerated crystals, more regular shape and crystal lattice and the most stable polymorph. After designing industrial equipment for sonochemistry use of ultrasound has become an additional method for particle size design also in industrial level (Org. Proc. Res. Dev., 2005, 9, 923). However, less is known about the behavior of ultrasound designed particles on post-precipitation steps, such as additional grinding, drying and packaging.

Further documents dealing with ultrasonic irradiation, typically to influence particle size and/or to influence crystallinity, include for example: WO2008/155570, WO2008/114052, WO2010/007447, and WO2010/007446.

The present invention now makes effective use of ultrasound treatment and relates to a new process for removing residual solvents from solids in which molecules of solvents are deeply included or occluded in solid particles. The process disclosed herein copes with the problem that during precipitation or crystallisation of a solid organic compound, higher amounts of solvents may be included in the precipitate or crystal, which may later be difficult to be removed by drying. Drying may not be sufficient to remove residual solvents to levels required for application of the particular material. Owing to the special care during the combination of steps comprising the compound being treated by ultrasound, with the present invention higher drying temperature can be omitted to sufficiently remove the residual solvents, hence in cases of thermo-labile solid compound to be obtained, such as certain active pharmaceutical ingredients, there is a significant less tendency to product degradation. Without taking account of the present invention, in many cases a tighter inclusion of residual solvents is a consequence of quick and less controlled process of crystallisation, or less controlled precipitation of amorphous material. In such conventional cases slower precipitation or preparation of a crystalline product may have been of help, but such an approach may be insufficient from the outset, or this may even be impossible because either crystalline form does not exist or is unwished due to special use of material. Also a change of the precipitation solvent is not sufficient if the new precipitation does not reach the main goal, e.g. purification of the substance. One may contemplate to reduce tightly included residual solvents by making smaller particles and to then follow with the drying process, but unfortunately even when using such approach the removal of solvents may not be satisfactory.

The present invention overcomes such obstacles and can achieve a remarkable minimization of any residual solvent, especially in case of organic solvent, from the finally obtained particulate chemical compound. Further surprisingly, the remarkable residual solvent reducing effect as found to be associated with ultrasonic treatment appears largely independent from any particle reduction effect, as other methods to reduce particle size - in an attempt to analogously achieve solvent reduction subsequent to particle size reduction - turned out to be much less effective. Yet the possibility of solvent reduction combined with control of particle size is an additional advantage of using ultrasonic treatment under appropriate conditions.

The process of the present invention includes providing a solution of a chemical compound in a solvent or a mixture of solvents, and subjecting said solution to precipitation or crystallization. Precipitation or crystallization can be achieved by cooling, for example at a rate of -25 °C per hour or slower, i.e. less than -15 °C or less than -10 °C per hour. Precipitation or crystallization from the solution can also be conducted by addition of an antisolvent, changing pH, changing ion concentration, addition of a complex ion, by triggering polymerization, or combination thereof. In the alternative, a suspension of the chemical compound can be provided. In either case, the precipitated or crystallized chemical compound, or suspension, is subjected to ultrasonic treatment.

Ultrasound apparatus employed in the present invention can include either a dipped probe or an ultrasonic flow cell. A dipped probe irradiates the whole volume of the precipitation system, but it has a limited space reach. In more bulky volumes more than one dipped probe can be used. The ultrasonic flow cells are more suitable for higher volumes. A solution is pumped through the irradiating cell from the primary vessel either to another vessel applying only one cycle of ultrasound treatment or to the same vessel treating the mixture continuously by several cycles of ultrasound treatment.

Frequency range of an ultrasound probe/apparatus can be 20 kHz to 1 MHz, preferably 20 - 25 kHz .

The operating power of an ultrasound probe/apparatus can be a characteristic feature of a commercial device and is ranged up to 500 W for one irradiating unit, but a more sophisticated cell can be composed from several irradiating units. Preferably an irradiating unit has the power levels of between 150 W and 400 W, which can be willfully realized in 0-100 % of its maximal power. The amplitude of an ultrasound apparatus can be adjusted from 20 % to 100 % during the ultrasonic treatment.

Treatment of complete industrial scale batch, which can be interpreted as working with at least 0.5 kg final precipitate or crystal particles, preferably with at least 2 kg, more preferably at least 5 kg, with the ultrasound can be performed in at least 10 minutes, particularly when receptacle-type reaction vessels are employed. Ultrasonic treatment can also be performed in fluidic-type reaction vessels when small quantities (for example at least 10 mg) of precipitate or crystal particles pass an ultrasound probe at a rate of 0.5 to 5 m³ per hour, preferably 1.5 to 2.5 m³ per hour. In this configuration it is sufficient to treat the particles with ultrasound for less than a second, but preferably at least 2 seconds, more preferably at least 4 seconds, in order to promote residual solvent removal from particle matrix.

Suitable methods to separate or isolate the solid particles of the chemical compound from a liquid phase obtained from the "solution treatment step b)", and prior to drying the solid particles, include methods of for example filtration, decanting, sieving, without being limited thereto. Applying filtration is preferred. Optionally, it is possible to wash the solid particles before or after isolation/separation by a suitable washing medium, but washing can also be omitted.

Drying temperature chosen can be at least 20°C, preferably at least 35°C, but can also be higher like for example at least 40°C, 50°C or at least 60°C. A skilled person will appreciate the teaching of the present invention and choose drying temperature appropriately according to the compound being dried, solvent being removed or other aspects of a process employed. For example, when the process of the present invention is combined with a freeze-drying step, i.e. freeze-dying the compound after it is precipitated or crystallized and optionally the major portion of solvent being decanted, drying temperatures can be considerably lower than 20°C. In such settings the drying temperatures can be set at even lower than -30°C, but will normally be at least -20°C, -10°C or at least 0°C.

For example when preparing an antihypertensive agent as an illustrative compound example, olmesartan medoxomil, by crystallisation from acetonitrile we surprisingly found that the residual solvent was considerably easier to remove if precipitation process at least partly is accompanied by ultrasonic irradiation. Though it is known that ultrasonic irradiation favours smaller particles and a thermodynamically stable crystalline form, it has surprisingly been found that the removal of solvent is easier in spite of the same particle size and the same polymorph and crystallinity.

Thus the process of the invention includes ultrasonic irradiation of a solution during nucleation of particles in order to obtain material with low level of residual solvents.

The process of the invention alternatively includes ultrasonic irradiation of a suspension after nucleation of particles in order to obtain material with low level of residual solvents.

In a particular embodiment, the process of the invention includes ultrasonic irradiation of precipitation process in order to obtain an active pharmaceutical ingredient as crystalline material with low level of residual solvents.

In an alternative particular embodiment, the process of the invention includes ultrasonic irradiation of precipitation process in order to obtain an active pharmaceutical ingredient as amorphous material with low level of residual solvents.

In further embodiments, the process of the invention includes ultrasonic irradiation of precipitation process in order to obtain an active pharmaceutical ingredient with low level of residual solvents wherein an active pharmaceutical ingredient is selected from agents for treatment of acute attacks of migraine, treatment of neurodegenerative diseases such as age-related disorders, Alzheimer's dementia, senile dementia, vascular dementia, AIDS dementia, amyotrophic lateral sclerosis, cognition disorders, congenital malformations, mental retardation, stroke caused disorders, neurologic diseases such as epilepsy, parkinsonism, extrapyramidal disorders, tardive dyskinesia, CNS stimulants, antidepressants, antipsychotics, anxiolytics, sedatives, agents for treatment of other psychotic disorders such as attention deficit hyperactivity disorder, bipolar disorder, generalized anxiety disorder, obsessive-compulsive disorder, stress disorders, for eating disorders such as anorexia nervosa and order anorectic disorders, bulimia, cachexia, obesity and other metabolic disorders, general anesthetics, analgesic drugs, analgesic enhancers, non-opioid analgesics, opioid analgesics, antitussives, expectorants, antipyretics, agents for treatment of neuropathic pain, neuropathy, antispastic drugs such as agents for treatment of muscle spasms, myasthenia gravis, fibromyalgia, muscular dystrophy, smooth muscle relaxants, agents for treatment of inflammation, inflammatory response syndrome, agents for treatment of bone diseases, osteoarthritis, ankylosing spondylitis, antiarthritic drugs, bone formation stimulants, forming factors, bone resorption inhibitors, disease-modifying anti-rheumatic drugs, agents for treatment of immunologic neuromuscular disorders, immunological genetic disorders, autoimmune diseases such as multiple sclerosis, systemic lupus erythematosus, and other autoimmune disorders, immunizing agents, immunomodulators, immunostimulants, immunosuppressants, agents for treatment of severe combined immunodeficiency disease, transplant rejection, agents for treatment of renal diseases, and renal diseases caused disorders including renal failure, nephritis, failure, diuretics, antidiuretics, agents for treatment of urinary incontinence, benign prostatic hyperplasia therapy and other urologic drugs, agents for treatment of acute myocardial infarction, angina pectoris, heart failure, heart stroke, ischemic stroke, ischemia, and other cardiovascular drugs such as antiarrhythmic drugs, cardioprotectants, agents for treatment of atherosclerosis, hypotension, hypertension, lipoprotein disorders, cholesterol and lipid metabolism disorders, peripheral arterial diseases, peripheral vascular diseases, coronary arteries disorders, vasodilators, hematologic agents, hematopoietic agents, antianemics, agents for treatment of hematopoiesis disorders, coagulation disorders, anticoagulants, antifibrinolytics, thrombolytics, anticoagulant reversing agents, antiplatelet agents, antithrombocythemics, antithrombocytopenics, antihistaminics, bronchodilators, antiallergy/antiasthmatic drugs, nasal decongestants, agents for treatment of sepsis or septic shock, acute respiratory distress syndrome, chronic obstructive bronchitis, upper respiratory tract disorders, chronic obstructive pulmonary diseases, infant respiratory distress syndrome, pulmonary emphysema, pulmonary hypertension, severe acute respiratory syndrome, respiratory stimulants, agents for treatment of gastrointestinal disorders, gastritis, gastroesophageal reflux, non-ulcer dyspepsia, nausea and vomiting, gastric emptying disorders, antiulcer drugs, antispasmodics, emetics, gastric antisecretory drugs, agents for treatment of inflammatory bowel disease, irritable bowel syndrome, pancreatic disorders, liver cirrhosis, liver fibrosis hyperbilirubinemia, antidiabetic drugs, hyperglycemic agents, symptomatic antidiabetic agents, agents for treatment of type 1 diabetes, of type 2 diabetes, agents for adrenocortical dysfunction therapy, aldosteronism, diabetes insipidus, androgen decline in the aging male (andropause), agents for prevention of premature ejaculation, treatment of erectile dysfunction, male contraceptives, male infertility, female contraceptives, steroidal and nonsteroidal contraceptives, agents for treatment of female sexual function and reproduction, endometriosis, female infertility, menorrhagia, dysmenorrhea, postmenopausal syndrome, preterm labor, uterine stimulants and tocolytics, hormones and hormone replacement agents, agents for treatment pituitary gland disorders such as growth hormone excess, acromegaly, growth hormone deficiency, hyperprolactinemia, agents for thyroid disease therapy, hyperparathyroidism, hypercalcemia, hypogonadism, hypergonadism and other endocrine glands disorders, endocrine cancer therapy, oncolytics, antineoplastic agents for various types of carcinomas, sarcomas and lymphomas, agents for treatment of metabolic disorders like in purine and pyrimidine metabolism for treatment of gout, uricosurics, antodots and detoxifying agents such as agents for treatment of poisoning antinarcoleptic drugs, antagonists to digoxin, antagonists to metals, antagonists to narcotics, antagonists to benzodiazepines, antagonists to cholinomimetic agents, antihematotoxic, agents, antineurotoxic agents, agents for antibiotic degrading therapy, chemopreventive and chemoprotective agents, chemosensitizers, antiabuse drugs and agents for treatment of substance dependency as for smoking cessation, treatment of alcohol dependency, cocaine dependency, opioid dependency, agents for treatment of various infections (antiinfectives), antibacterial drugs, antibiotics, antimycobacterial agents, tuberculostatics, antidiarrheal agents, anti-helicobacter pylori agents, antimycoplasmal agents antibacterial activity enhancers, antifungal agents, antifungal activity enhancers, antiviral drugs such as agents for treatment of viral hepatitis, cytomegalovirus, hantavirus, herpes virus, HIV, influenza virus, papilloma virus, rhinovirus, RSV, varicella zoster virus infections, AIDS medicines, antiamebics and agents for protozoal diseases, antileishmanials, antimalarials, anticoccidials, antiprotozoal activity enhancers, antitrichomonals, antitrypanosomals, anthelminthics, antileprosal drugs, dermatologic drugs, agents for treatment of allergic skin disorders, urticaria, antipruritics, antipsoriatics, ophthalmic drugs, agents for treatment of age-related macular degeneration, myopia, retinopathy, diabetic retinopathy, retinoprotectors or anticataract agents, antiglaucoma agents, antiinflammatory ophthalmic agents, antiallergic ophthalmic agents, corneal wound healing agents, mydriatics.

In further specific embodiments, the process of the invention includes ultrasonic irradiation of precipitation process in order to obtain an active pharmaceutical ingredient with low level of residual solvents wherein an active pharmaceutical ingredient is selected from abacavir, acamprosate, acebrophylline, aceclofenac, acemetacin, acenocoumarol, acetylcysteine, acetyl-L-carnitine, acetylsalicylic acid, aciclovir, acitazanolast, acitretin, adapalene, adefovir dipivoxil, ademetionine, agomelatine, albendazole, alclometasone, alendronic acid, alfacalcidol, alfuzosin, alibendol, aliskiren, allopurinol, almotriptan, alosetron, alprazolam, alprostadil, alteplase, alvimopan, ambrisentan, ambroxol, amifampridine, amifostine, amikacin, amiodarone, amisulpride, amitriptyline, amlodipine, amorolfine, amoxicillin, amphotericin B, ampicillin, anastrozole, anecortave, anidulafungin, aniracetam, antofloxacin, aprepitant, aprotinin, arbidol, arformoterol, argatroban, aripiprazole, armodafinil, artemether, artesunate, ascorbic acid, asenapin, atazanavir, atenolol, atomoxetine, atorvastatin, atosiban, atovaquone, azacitidine, azapentacene, azasetron, azathioprine, azelastine, azelnidipine, azithromycin, azlocillin, aztreonam, bacitracin, baclofen, balsalazide, barnidipine, basiliximab, batroxobin, bazedoxifen, beclometasone, benazepril, bendroflumethiazide, benidipine, benzydamine, bepridil, beraprost, besifloxacin, betamethasone, betaxolol, bevacizumab, bexarotene, bezafibrate, biapenem, bicalutamide, bifonazole, bimatoprost, bisoprolol, bivalirudin, blonanserin, bortezomib, bosentan, brimonidine, brinzolamide, brivudine, bromazepam, bromfenac, bromhexine, bromocriptine, bromopride, brotizolam, budesonide, buflomedil, buprenorphine, bupropion, buproprion, buserelin, buspirone, busulfan, butamirate, butoconazole, cabergoline, calcipotriol, calcitriol, calcium dobesilate, calcium levofolinate, camostat, candesartan cilexetil, capecitabine, captopril, carbamazepine, carbimazole, carbocisteine, carbomer, carboplatin, carperitide, carvedilol, caspofungin, cefaclor, cefadroxil, cefalexin, cefalotin, cefathiamidine, cefazedone, cefazolin, cefcapene pivoxil, cefdinir, cefditoren pivoxil, cefepime, cefetamet pivoxil, cefixime, cefmenoxime, cefminox, cefotaxime, cefotiam, cefovecin, cefpiramide, cefpodoxime proxetil, cefprozil, ceftazidime, ceftezole, ceftizoxime, ceftobiprol medocaril, ceftriaxone, cefuroxime, cefuroxime axetil, celecoxib, celiprolol, cetirizine, cetuximab, cevimeline, chlorhexidine, chloropyramine, chlorphenamine, chlortalidone, chlorzoxazone, ciclesonide, ciclopirox, ciclosporin, cilazapril, cilnidipine, cilostazol, cimetidine, cinacalcet, cinepazet, ciprofloxacin, cisatracurium besylate, cisplatin, citalopram, citicoline, clarithromycin, clevidipine, clevudine, clindamycin, clobenzorex, clobetasol, clobutinol, clodronic acid, clofarabin, clomipramine, clonazepam, clonidine, cloperastine, clopidogrel, clotrimazol, cloxazolam, clozapine, cobamamide, codeine, colistin, conivaptan, corticotropin, cromoglicic acid, cyclobenzaprine, cyproterone, cytarabine, dabigatran, danaparoid, dantrolene, dapoxetin, daptomycin, darifenacin, darunavir, dasatinib, decitabin, deferasirox, deferiprone, degarelix, desflurane, desloratadine, desmopressin, desogestrel, desoximetasone, desvenlafaxine, dexamethasone, dexibuprofen, dexlansopril, dexmedetomidine, dexmethylphenidate, dexpanthenol, dexrazoxane, diacerein, diatrizoic acid, diazepam, diclofenac, didanosine, dienogest, diflunisal, digoxin, diltiazem, dimemorfan, dimenhydrinate, dimethicone, dinoprostone, diphenhydramine, dipyridamole, docetaxel, dolasetron, domperidone, donepezil, doripenem, dornase alfa, dorzolamide, doxazosin, doxercalciferol, doxofylline, doxorubicin, doxycycline, doxylamine, dronabinol, dronedarone, dropropizine, drotaverine, duloxetine, dutasteride, ebastine, eberconazole, ecallantide, econazole, edaravone, efalizumab, efavirenz, eflornithine, eicosapentaenoic acid, elcatonin, eletriptan, eltrombopag, emtricitabine, enalapril, enfuvirtide, entacapone, entecavir, epalrestat, eperisone, ephedrine, epinastine, epinephrine, epirubicin, eplerenone, eprosartan, eptifibatide, erdosteine, erlosamide, erlotinib, ertapenem, erythromycin, escitalopram, eslicarbazepine, esomeprazole, estradiol, eszopiclone, etamsylate, etifoxine, etimicin, etizolam, etodolac, etofenamate, etonogestrel, etoposide, etoricoxib, etravidine, everolimus, exemestane, exenatide, ezetimibe, famciclovir, famotidine, febuxostat, felbinac, felodipine, fenofibrate, fenspiride, fentanyl, fenticonazole, fesoterodine, fexofenadine, finasteride, flecainide, flomoxef, flucloxacillin, fluconazole, fludarabine, fluindione, flunisolide, fluocinonide, fluorometholone, fluorouracil, fluoxetine, flupirtine, flurbiprofen, fluticason furoate, fluticasone, fluvastatin, fluvoxamine, follitropin beta, fondaparinux, formoterol, fosamprenavir, fosaprepitant, foscarnet sodium, fosfluconazole, fosfomycin, fosinopril, fosphenytoin, fospropofol, frovatriptan, fudosteine, fulvestrant, furosemide, fusidic acid, gabapentin, gaenoxacin, galantamine, ganirelix, gatifloxacin, gefitinib, gemcitabine, gemfibrozil, gemifloxacin, gentamicin, glibenclamide, gliclazide, glimepiride, glipizide, gliquidone, glycopyrronium hydroxide, goserelin, granisetron, grepafloxacin, guaifenesin, haloperidol, helicidine, hydralazine, hydrochlorothiazide, hydrocortisone, hydromorphone, hydroxocobalamin, hydroxychloroquine, hydroxyzine, ibandronic acid, ibuprofen, icatibant, iloperidon, imatinib, imidafenacin, imidapril, imiquimod, indacaterol, indapamide, indometacin, ipratropium bromide, irbesartan, irinotecan, isoconazole, isoniazid, isosorbide dinitrate, isothipendyl, isotretinoin, isradipine, itraconazole, ivabradine, ivermectin, ixabepilon, kanamycin, ketanserin, ketoconazole, ketoprofen, ketorolac, ketotifen, lacidipine, lactulose, lamivudine, lamotrigine, lanoconazole, lanreotide, lansoprazole, lanthanum carbonate, lapatinib, lasofoxifen, latanoprost, leflunomide, lenalidomide, lentinan, lercanidipine, letrozole, leuprorelin, levetiracetam, levobupivacaine, levocabastine, levocarnitine, levocetirizine, levodropropizine, levofloxacin, levomethadone, levonorgestrel, levosalbutamol, levosimendan, levosulpiride, levothyroxine sodium, lidocaine, limaprost, linezolid, liraglutide, lisdexamfetamine, lisinopril, lofepramine, loperamide, loratadine, lorazepam, lormetazepam, losartan, loteprednol, lovastatin, loxoprofen, lubiprostone, luliconazole, lymecycline, malathion, manidipine, maraviroc, maxacalcitol, mebeverine, mecasermin, meclofenoxate, mecobalamin, medroxyprogesterone, mefenamic acid, megestrol, meloxicam, melphalan, mequitazine, meropenem, mesalazine, metamizole sodium, metaxalone, metformin, methadone, methisopril, methocarbamol, methotrexate, methylnaltrexone, methylphenidate, methylprednisolone, metoclopramide, metopimazine, metoprolol, metronidazole, mexidol, micafungin, miconazole, midazolam, mifepristone, mildronate, milnacipran, minocycline, minodronate, minoxidil, miriplatin, mirtazapine, mitiglinide, mitotane, modafinil, molsidomine, mometasone, montelukast, morniflumate, morphine, mosapride, moxifloxacin, moxonidine, mozavaptane, mupirocin, mycophenolate mofetil, nabilone, nabumetone, nadifloxacin, nafamostat, nafcillin, naftifine, naftopidil, nalfurafine, naphazoline, naproxen, naratriptan, natamycin, nateglinide, nedaplatin, nefopam, nelarabine, nelfinavir, nepafenac, nesiritide, nevirapine, nicardipine, nicergoline, nicorandil, nifedipine, nilotinib, nimesulide, nimodipine, nisoldipine, nitrofural, nitrofurantoin, nitroxoline, nizatidine, norepinephrine, norethisterone, norfloxacin, noscapine, nystatin, ofloxacin, olanzapine, olmesartan medoxomil, olopatadine, omalizumab, omeprazole, ondansetron, opipramol, orlistat, ornidazole, oseltamivir, otilonium, oxaliplatin, oxaprozin, oxcarbazepine, oxiconazole, oxiracetam, oxybutynin, oxycodone, oxymetazoline, oxytetracycline, ozagrel, paclitaxel, paliperidone, palivizumab, palonosetron, pamidronic acid, pantoprazole, paracetamol, paricalcitol, paroxetine, pazopanib, pazufloxacin, pemetrexed, pemirolast, pentobarbital, pentostatin, pentoxifylline, peramivir, pergolide, perindopril, perospirone, phendimetrazine, phenylbutyrate, phenylephrine, phenytoin, pholcodine, pidotimod, pilsicainide, pimecrolimus, pinaverium bromide, pioglitazone, piperacillin, piracetam, pirfenidone, piroxicam, pitavastatin, pivmecillinam, plerixafor, posaconazole, pralatrexate, pramipexole, pramlintide, pranlukast, prasugrel, pravastatin, prednisolone, prednisone, pregabalin, primidone, pristinamycin, procarbazine, progesterone, promazine, promestriene, promethazine, propafenone, propiverine, propofol, propranolol, prucalopride, prulifloxacin, quetiapine, quinapril, rabeprazole, racecadotril, raloxifene, raltegravir, ramatroban, ramelteon, ramipril, ranibizumab, ranitidine, ranolazine, rebamipide, regadenoson, remifentanil, repaglinide, revaprazan, ribavirin, rifampicin, rifamycin, rifaximin, riluzole, risedronate, risperidone, ritonavir, rituximab, rivaroxaban, rivastigmin, rizatriptan, rocuronium bromide, romidepsin, romiplostim, ropinirole, ropivacaine, rosiglitazone, rosuvastatin, rotigotine, roxithromycin, rufinamide, rupatadine, salbutamol, salcatonin, salmeterol, saquinavir, sargramostim, sarpogrelate, saxagliptin, scopolamine, secnidazole, selegiline, sertaconazole, sertindole, sertraline, sevoflurane, sibutramine, sildenafil, silodosin, simvastatin, sincalide, sirolimus, sitafloxacin, sitagliptin, sitaxentan, sivelestat, solifenacin, somatropin, sorafenib, sotalol, spiramycin, spironolactone, stavudine, stiripentol, sulbactam, sulfacetamide, sulfasalazine, sulodexide, sulpiride, sultamicillin, sumatriptan, sunitinib, suplatast tosilate, tacrolimus, tadalafil, tafluprost, talniflumate, taltirelin, tamibarotene, tamoxifen, tamsulosin, tapentadol, tazarotene, tebipenem, teceleukin, tedisamil, tegafur, tegaserod, teicoplanin, telavancin, telbivudin, telithromycin, telmisartan, temazepam, temozolomide, temsirolimus, tenofovir disoproxil, tenoxicam, teprenone, terazosin, terbinafine, terbutaline, teriparatide, terlipressin, testosterone, tetrabenazine, tetracosactide, thalidomide, theophylline, tiagabine, tianeptine, tibolone, ticlopidine, tigecycline, timolol, tiotropium bromide, tipepidine, tipranavir, tiropramide, tizanidine, tobramycin, tolperisone, tolterodine, tolvaptan, topiramate, topotecan, torasemide, trabestedine, tramadol, tramazoline, trandolapril, tranexamic acid, tranilast, travoprost, trazodone, tretinoin, triamcinolone acetonide, triazolam, tribenoside, trimebutine, trimetazidine, trimethoprim, triptorelin, trospium hydroxide, troxerutin, tulobuterol, ubenimex, udenafil, ulprisnil, urapidil, ursodeoxycholic acid, valaciclovir, valganciclovir, valproate semisodium, valproic acid, valsartan, vancomycin, vardenafil, varenicline, venlafaxine, verapamil, verteporfin, vildagliptin, vinflunine, vinorelbine, vinpocetine, voriconazole, warfarin, xylometazoline, zaleplon, ziconotide, zileuton, ziprasidone, zofenopril, zoledronic acid, zolmitriptan, zolpidem, zonisamide, zopiclone, zotarolimus.

Depending on which one and how the chemical compound is processed, an appropriate solvent or solvent mixture is chosen. Possibly factors for choosing a solvent or solvent mixture depending on the chemical compound are suitable precipitation or crystallization solvents, antisolvents, recrystallisation solvents, solvents used in previous chemical or biochemical reactions, auxiliary solvents used for other purposes, etc. Especially for processing active pharmaceutical ingredients, lowering solvent level in the final product to certain maximum levels is an important task, wherein the ICH Q3C standard provides a suitable target for the corresponding organic solvent, even in cases when scale-up systems are used. ICH Q3C standard with respective maximum concentration limits in ppm are shown below for class 1 and class 2 solvents, while further indicated class 3 solvents may be reduced to a desired level:

| **TABLE 1.** Class 1 solvents in pharmaceutical products (solvents that should be avoided). | |
|---|---|
| *Solvent* | *Concentration limit (ppm)* |
| Benzene | 2 |
| Carbon tetrachloride | 4 |
| 1,2-Dichloroethane | 5 |
| 1,1-Dichloroethene | 8 |
| 1,1,1-Trichloroethane | 1500 |

| **TABLE 2.** Class 2 solvents in pharmaceutical products. | | |
|---|---|---|
| *Solvent* | *PDE (mg*/*day)* | *Concentration limit (ppm)* |
| Acetonitrile | 4.1 | 410 |
| Chlorobenzene | 3.6 | 360 |
| Chloroform | 0.6 | 60 |
| Cyclohexane | 38.8 | 3880 |
| 1,2-Dichloroethene | 18.7 | 1870 |
| Dichloromethane | 6.0 | 600 |
| 1,2-Dimethoxyethane | 1.0 | 100 |
| N,N-Dimethylacetamide | 10.9 | 1090 |
| N,N-Dimethylformamide | 8.8 | 880 |
| 1,4-Dioxane | 3.8 | 380 |
| 2-Ethoxyethanol | 1.6 | 160 |
| Ethylene glycol | 6.2 | 620 |
| Formamide | 2.2 | 220 |
| Hexane | 2.9 | 290 |
| Methanol | 30.0 | 3000 |
| 2-Methoxyethanol | 0.5 | 50 |
| Methyl butyl ketone | 0.5 | 50 |
| Methylcyclohexane | 11.8 | 1180 |
| N-Methylpyrrolidone | 5.3 | 530 |
| Nitromethane | 0.5 | 50 |
| Pyridine | 2.0 | 200 |
| Sulfolane | 1.6 | 160 |
| Tetrahydrofuran | 7.2 | 720 |
| Tetralin | 1.0 | 100 |
| Toluene | 8.9 | 890 |
| 1,1,2-Trichloroethene | 0.8 | 80 |
| Xylene | 21.7 | 2170 |

Other solvents, such as Class 3 of ICH Q3C standard as listed in Table 3 below, have lower toxic potential, but the present invention can be applied also to solvent systems comprising such Class 3 solvents in achieving still lower amounts such as 1000 ppm at maximum, preferably 500 ppm at maximum.

| **Table 3.** Class 3 solvents or other | which should be limited by GMP quality-based requirements. |
|---|---|
| | |
| Acetic acid | Heptane |
| Acetone | Isobutyl acetate |
| Anisole | Isopropyl acetate |
| 1-Butanol | Methyl acetate |
| 2-Butanol | 3-Methyl-1-butanol |
| Butyl acetate | Methyl ethyl ketone |
| tert-Butyl methyl ether | Methyl isobutyl ketone |
| Cumene | 2-Methyl-1-propanol |
| Dimethyl sulfoxide | Pentane |
| Ethanol | 1-Pentanol |
| Ethyl acetate | 1-Propanol |
| Ethyl ether | 2-Propanol |
| Ethyl formate | Propyl acetate |
| Formic acid | |

It will become apparent and it will be appreciated by the skilled reader from the full disclosure provided herein, the principles of the present invention will be described in some further detail by a typical example using an exemplified active pharmaceutical ingredient to be crystallized, and choosing a correspondingly selected solvent system adapted to a crystallization process of this active pharmaceutical ingredient. The present invention is however by no means limited to the examples and embodiments as typically explained in the following. Rather, demonstrating the process according to the present invention by using this active pharmaceutical ingredient appears representative for others, particularly since an appropriately chosen solvent is difficult to remove.

In an embodiment showing the basic effects of the present invention, olmesartan medoxomil was crystallized by thermal recrystallisation from acetonitrile - water mixture in the presence of ultrasonic irradiation. According to regulatory guidelines a pharmaceutical ingredient should have limited amounts of impurities in order to avoid toxic side effects, so an efficient purification should be carried out. Among recrystallisation solvents that were tested, acetonitrile with addition of lower amounts of water was chosen as the best one in view of elimination of impurities and yields with respect to the compound as such, but acetonitrile cannot be completely removed from crystals even at harsh drying. Residual amounts of acetonitrile readily exceed the allowed amounts of acetonitrile according to ICH guidelines, especially when a process is scaled-up.

A general laboratory recrystallisation procedure for purification of olmesartan medoxomil may follow the procedure described as follows. Olmesartan medoxomil was mixed with acetonitrile preferably in 10 : 1 (v/w) amount, the mixture was heated to reflux to obtain a solution and water was added, preferably in an amount equal to acetonitrile. The solution was then cooled to a temperature lying in a range from -10 to 25 °C, suitable to around 0 °C, while stirring. The mixture was further stirred at the final temperature for 0.5 - 5 h, preferably for 1 h. The solid product was filtered and dried to constant weight, in reference cases samples were dried at temperatures 40 °C at 100 mbar for 24 and 48 hours.

Table 4 shows particle size and residual acetonitrile of such set of reference experiments.

**Table 4**

| scale | examples | vessel | stirring | particles size | residual MeCN |
|---|---|---|---|---|---|
| | | | | d_{0 9}, µm | MeCN,ppm |
| Tens grams | 3 | flask | magnetic | 150 - 190 | 600 - 1200 |
| hundreds grams | 3 | reactor | mechanical | 150 - 300 | 3000 - 3500 |

In accordance with the present invention, an ultrasonic treatment by ultrasonic irradiation was applied during crystallization. With a few grams on laboratory scale and with a volume level up to 100 ml standard ultrasonic probe Hielscher UP200S suitable for laboratory scale was used. It generates longitudinal mechanical vibrations by means of electric excitation with a frequency of 24 kHz. The power output of the probe can be steplessly adjusted between 20 in 100 % of the maximum output (200 W). The vibrations are amplified by the sonotrode fitted to the horn and formed as a λ/2 vibrator and transferred via its end face to the liquid medium to be sonically irradiated. Despite its high efficiency, the UP200S does not have to be artificially cooled and its therefore suitable for continuous operations.

Though particles can be reduced by various methods, for example by reducing scale, designing stirring (e. g. Ultraturax™) and additional milling, only samples which were prepared with ultrasonic irradiation were much more efficiently dried despite similar particles size reduction across the various methods. Surprisingly ultrasonic irradiation remarkably reduced the level of residual acetonitrile after drying, and in view of the reference methods this is not, at least not significantly, attributable to a particle size reduction. Table 5 shows results of a comparative test on 5 g scale, in which ultrasonic probe worked with 50 % amplitude and cycle 1 (continuous action). The solid product was filtered and dried at 10 mbar to constant weight, in reference cases samples were dried at temperatures 40, 50 and 60 °C for 24 and 48 hours.

**Table 5**

| | method | particles | Additional drying | | | |
|---|---|---|---|---|---|---|
| | | | | 40 °C | 50 °C | 60 °C |
| | | d_{0 9}, µm | time (h) | MeCN,ppm | MeCN,ppm | MeCN,ppm |
| 1 | ultrasound | 36 | 24 | 378 | 359 | 331 |
| 2 | | | 48 | 355 | 321 | 280 |
| 3 | stirring | 56 | 24 | 638 | - | - |
| 4 | | | 48 | 581 | - | - |
| 5 | stirring + milling | 32 | 48 | 538 | - | - |

As shown by the set of experiments, reduction of particle size and generating of larger particle surface by additional milling lowered solvent amount only by about 50 ppm (row 5 compared to row 4), while an application of ultrasound reduced it by more than 200 ppm on the same level of particles size (row 2 compared to row 4). This is a remarkable difference in the result, given the very low absolute dimension of residual solvent to be considered. It is believed that particle size is not of primary importance for substantially removing residual solvents, but a mode how the solvent molecules are introduced into the structure of a particle. It is further believed that the use of ultrasound during the creation of particles likely influences or changes the mode of incorporation of solvent molecules into the structure of a particle.

In a further set of experiments using ultrasound some other parameters were studied in comparison to classical methods in which mixtures were stirred by mechanical stirrers at various rotation speeds, subsequently followed by drying. In a set of experiments characteristic for the invention, stirring was applied by ultrasonic irradiation using different cooling regime and amplitude level and cycle of operation. The ultrasonic irradiation was provided by standard ultrasonic probe Hielscher UP200S. Table 6 shows the results of the experiments displaying particle size and level of acetonitrile. It is evident that use of ultrasonic irradiation considerably reduces residual acetonitrile which otherwise cannot be removed even after harsh drying. It also reveals that the level of influence depends on the regime of ultrasonic treatment.

**Table 6**

| exp | agitation | amplitude, cycle | way of cooling | residual acetonitrile | d_{0.9} |
|---|---|---|---|---|---|
| 1 | magnetic stirrer | | cooling to 0 °C | 2351 ppm | 53 µm |
| 2 | magnetic stirrer | | cooling to r. t. | 1169 ppm | 71 µm |
| 3 | mechanical (100 rpm) | | cooling to 0 °C | 2601 ppm | 464 µm |
| 4 | mechanical (300 rpm) | | cooling to 0 °C | 1689 ppm | 370 µm |
| 5 | mechanical (700 rpm) | | cooling to 0 °C | 1072 ppm | 515 µm |
| 6 | ultra sound | 50 %; 1 | cooling to 0 °C | 465 ppm | 36 µm |
| 7 | ultra sound | 50 %; 1 | first without cooling, then to r. t. | 486 ppm | 27 µm |
| 8 | ultra sound | 50 %; 0.5 | cooling first to r. t. then to 0 °C | 871 ppm | 29 µm |
| 9 | ultra sound | 50 %; 0.25 | cooling first to r. t. then to 0 °C | 934 ppm | 31 µm |
| 10 | ultra sound | 35 %; 1 | cooling first to r. t. then to 0 °C | 1231 ppm | 26 µm |
| 11 | ultra sound | 25 %; 1 | cooling first to r. t. then to 0 °C | 1062 ppm | 24 µm |
| 12 | magnetic stirrer + ultra sound | 50 %; 1 | cooling first to r. t. then to 0 °C | 682 ppm | 32 µm |

| | | | | | |
|---|---|---|---|---|---|
| r.t. - room temperature | | | | | |

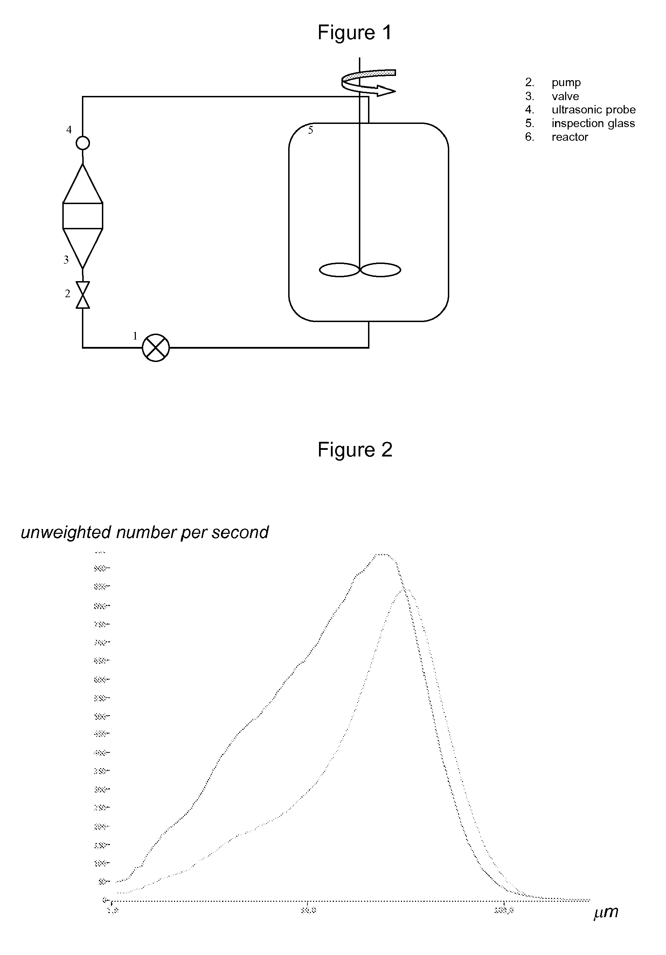

The method used in previously described experiments cannot be directly applied on scaling-up from grams to kilograms level (tens to hundreds of liters of solvent). A dipped ultrasonic probe lacks efficiency in such volumes because the distance range of ultrasonic irradiation is not sufficient. Ultrasonic flow-cells have been developed for application of sonochemistry in larger scales. In the further part of the embodiment of our invention a commercial ultrasonic process flow-cell device Prosonitron™ PX1120a installed into the system as depicted in Figure 1 was applied in larger scales. Specific experiments using this device differ from investigations in using a dipped probe, but special optimization approaches described below respectively contribute to enhance residual solvent reduction, and hence similar benefits of the invention as obtained for laboratory scale can be reached.

In Figure 1, reference signs denote the following:
1. pump
2. valve
3. ultrasonic probe
4. inspection glass
5. reactor

Olmesartan medoxomil was dissolved in acetonitrile, suitably in 10-fold volume (v/w) thereof, at temperature preferably higher than 60 °C, and the same volume of water was added. The mixture optionally can be filtered if crystals remain undissolved or appear after water addition. The mixture is optionally reheated to reflux if water addition makes a temperature shock which can cause turbidity. Preferably, the added water is preheated to avoid temperature shock. The mixture was than cooled to - 10 °C to 30 °C preferably 0 °C to room temperature with simultaneous flow of 0.5 to 5 m³ per hour, preferably 2 m³ per hour through the ultrasound device.

In a certain embodiment ultrasonic irradiation was applied only in special temperature interval of cooling.

In another embodiment ultrasonic irradiation was applied at special temperature at which cooling is ceased.

In a preferred option of said example the special temperature is the temperature interval of crystal nucleation.

In another more special example ultrasonic irradiation is applied at final temperature.

In a preferred manner, the entering olmesartan medoxomil was previously dried.

Some examples of special options are listed in Table 7. Further details are described in the Examples below.

**Table 7**

| | OLM | dissolution | Intermediate US | Final US | Final T | particle size | Residual MeCN |
|---|---|---|---|---|---|---|---|
| reference | | MeCN, then H₂O | / | / | 0 °C | 150-300 | 3000-4000 |
| 1 | dried | MeCN, then H₂O | continuous, 300 W | / | 25 °C | 70-80 | 750 |
| 2 | dried | MeCN, then H₂O | continuous, 300 W | 400 W, 150 min | 0 °C | -70 | 1100 |
| 3 | wet | MeCN : H₂O 1:1 | continuous, 300 W | 300 W, 150 min | 0 °C | -42 | 3600 |
| 4 | wet | MeCN : H₂O 1:1 | from 15 to 0 °C, 400 W | 400 W, 150 min | 0 °C | -35 | 6800 |
| 5 | wet | MeCN : H₂O 1:1 | from 43 to 0 °C, 200 W | 400 W, 30 min | 0 °C | -30 | 6800 |
| 6 | dried | MeCN, then H₂O | cont., 300 W 37 °C off, 20 min | / | 25 °C | 20-40 | 1800 |
| 7 | wet | MeCN : H₂O 1:1 | cont., 300 W 40 °C off, 5 min | 300 W, 30 min | 0 °C | 35 -55 | 1800 |
| 8 | dried | MeCN, then H₂O | 300 W 25 °C, 45 min from 25 to 0 °C, | 400 W, 60 min | 0 °C | 30-40 | 520 |
| 9 | | | | | | | 470 |
| 10 | | | | | | | 543 |
| 11 | dried | MeCN, then H₂O | 300 W from 40 to 37 °C, 25 °C, 45 min from 25 to 0 °C | 300 W, 60 min | 0 °C | 30-40 | 436 |
| 12 | dried | MeCN, then hot H₂O | | | | | 330 |

The product is filtered and dried at reduced pressure at 50 - 60 °C for 24 h and the level of acetonitrile is analyzed by gas chromatography.

As can be seen from the results in above table, ultrasonic irradiation can lead to considerable reduction of residual solvents in cases where this is impossible to reach by classical methods (i.e. including drying only). While the method is more or less robust on the small laboratory scale and soon shows benefits of ultrasonic treatment, the larger scale demands to define special crystallization parameters in order to reach benefits shown on the smaller scale. Thus, in a special case of thermal recrystallisation of olmesartan medoxomil from a mixture of acetonitrile - water 1:1 in a scale of tens of liters the following features are preferably met in order to reach the ICH Q3C standard which for acetonitrile is 410 ppm:
(A) to use a suitable ultrasonic irradiation device;
(B) to dissolve corresponding starting material, preferably avoiding to have any undissolved solid particles before the nucleation zone;
(C) to define nucleation zone;
(D) to control nucleation by applying ultrasonic irradiation in the nucleation temperature interval;
(E) to prevent reagglomerisation of fine crystals during further cooling to the filtration temperature;
(F) to treat final suspension with ultrasound in order to obtain fine particles and to break agglomerates.

As shown in Table 7 ultrasonic irradiation has been tested in various parts/periods of crystallization process and has shown benefits in lowering of residual solvents in most of experiments, but it has been surprisingly shown that ultrasonic treatment through the whole cooling does not appear the best option. Ultrasonic treatment during particular parts/periods of cooling shows more benefit or is more significant in most cases than other parts/periods of the crystallization process, but applying ultrasonic irradiation only in one part of the process, such as in the nucleation zone, may not be sufficient to lower solvent level below the optimum limit.

Details of experiments listed in Table 7 are described in Examples 4-11. From the experimental setup, it can be observed that experiments 2-7 did show enhanced results, but did not give best results because they did not fulfill the parameters of paragraphs (B) and (E). Any influence which generates particles before the nucleation zone can make the process less controlled which can lead to inferior results. And any reagglomeration of fine particles can produce the product from which the solvent is not sufficiently removed by drying, even if the agglomerates are rebroken into desired particles size.

A skilled person may vary irradiation regimes in particular steps of the process to give a scenario which finally leads to an efficient reduction of solvents.

So, after selecting a suitable device, such as Prosonitron™ PX1120a, according to item (A), further preferred scenarios includes choosing one or more conditions from the group of the following preferred operations to respectively address the parameters of items (B) to (F):
(B) In order to dissolve the starting material properly one or more of the following actions are preferred:
   - use of predried crude starting material in order to avoid any addition of unwanted different solvents or, optionally when multiple solvents are involved, to avoid obtaining inappropriate starting ratio of solvents,
   - to exclude undissolved crystals before crystallization starts, hot solution is filtered,
   - dissolving first in the more solubilising solvent, such as here acetonitrile, with further adding an optional second solvent, such as here water, instead of dissolving in a prepared mixture,
   - in the option of multiple solvents being involved, adding hot second solvent, such as here water, in an operation set forth in the previous item in order to avoid temperature shocks and crystal formation in any part of solution;
(C) the nucleation zone is preferably identified in advance in order to choose the right time for ultrasonic treatment; in the present example it was found to be 35-39 °C for the used system;
(D) controlling of nucleation in the nucleation temperature interval, which is provided in the present exemplified system by ultrasonic irradiation, e.g. with power 2 x 150 W, while cooling from 40 to 37 °C;
(E) preventing reagglomerisation of fine crystals during further cooling is preferably provided by ultrasonic irradiation, again with exemplified power of 2 x 150 W, at a temperature lower than the nucleation zone, here e.g. at 25 °C for a suitable, extended period of e.g. 45 min, and during further cooling, from the previously maintained temperature (25 °C) to lower temperature of e.g. about 0 °C;
(F) treating final suspension in order to obtain fine particles and to break any agglomerates is preferably provided by further ultrasonic irradiation, again with exemplified power of 2 x 150 W, at the afore-set low temperature of e.g. about 0 °C, for another suitable, extended period of e.g. 60 min.

The product can then be filtered and dried, for example at reduced pressure such as 20 mbar, at an appropriate temperature for an extended period of time, for example at about 55 °C for 24 h, and the level of residual solvent (here acetonitrile) can be analyzed by means of gas chromatography.

In the present representative experiments, application of preferred parameters gave a product with level of residual acetonitrile of 330 ppm with variation ± 50 ppm and particle size d(90) 30-40 µm. With the efficient combined technical features and taking account of preferred parameters, even scaled-up product in large amounts was obtained which was in accordance with ICH Q3C guidelines and was suitable for pharmaceutical use.

The process of the invention is not limited to the special commercial ultrasonic probe, used as described herein above. The preferred scenario of crystallization of olmesartan medoxomil was tested on robustness in additional ultrasonic device, such as an automated commercial device Prosonix 1 L HEL™ system equipped with 60 ml ultrasonic flow cell, and FBRM Lasentec™, and turbidity probes as well as in a bench scale Büchi MiniPilot 10™ system equipped with a Prosonic SONOLAB SL 250™ ultrasonic flow cell. The obtained results were even better with 70 - 130 ppm of residual acetonitrile and particle size d (90) of about 24 µm. Therefore we can conclude that such process is stable enough for designing an industrial line for production of pharmaceutical product.

The preferred example of reduction of residual acetonitrile is not a limiting example and may be applied or improved by different regimes of ultrasonic treatment. Different solvents and, if solvent mixtures apply, different solvent ratio may be tested for other systems to identify preferred options then, using the principles and advantages of the present invention. Any such adaptations within the disclosure of the present invention do not limit the applicability of the process of the invention as a method of reduction of residual solvents in other compounds, other solvent mixtures and other types of precipitation or crystallisation processes.

Moreover, the process of reducing residual solvents by ultrasound-influenced precipitation or crystallisation according to the present invention is not limited to preparation of crystalline compound, but it can be used also in preparation of amorphous substances.

The process of reducing residual solvents by ultrasound-influenced precipitation or crystallisation according to the present invention is also not limited to cooling techniques or thermal recrystallisation, but it can be also applied to other techniques such as precipitation or crystallization caused or triggered by addition of an antisolvent to a solvent solution, changing pH of a solvent solution, changing ion concentration of a solvent solution, addition of a complex ion to a solvent solution, triggering polymerization in solution; or any combination thereof, particularly any combination thereof with solvent/antisolvent, pH dependent; wherein the term "solvent" can be a single solvent or a solvent mixture, and wherein a dispersion could be used instead of a respectively denoted "solution".

In particular the process of the present invention is not limited to olmesartan medoxomil, but this compound was just used as a typical reference compound, and the present invention can be applied to other final products, notably in cases where one or more residual solvents cannot be removed by routine methods or cannot be removed because classical methods of drying can lead to higher degree of impurities.

In an approach to adopt the process of reduction of residual solvents in a solid product according to the present invention to other systems may include:
(i) recognizing a product from which one or more residual solvents cannot be removed to a desired or needed level, especially without degradation of the product, or finding a process of preparation which lead to such product;
(ii) testing the efficiency of ultrasonic treatment of the precipitation/crystallization process on a laboratory scale with a dipping ultrasound probe;
(iii) controlling, preferably optimizing, the ultrasonic treatment in order to obtain a product with low assay of residual solvents.

Controlling and preferably optimizing in item (iii) may include at least one of the following items:
a selecting an appropriate ultrasonic device which includes ultrasonic irradiator, type of reaction vessel with an appropriate stirrer and accompanying auxiliaries for efficient exposing of the mixture to ultrasonic irradiation;
b preparing the corresponding mixture of product and solvent or mixture of solvents;
c choosing an appropriate concentration, solvent ratio and temperature regime;
d defining ultrasonic irradiation regime.

Selecting an appropriate ultrasonic device may include choosing an appropriate ultrasonic probe or cell which is incorporated into a effective system of sonocrystallization and may include one or more ultrasonic probes which are dipped into the crystallization medium irradiating the whole crystallization mixture or an ultrasonic cell separated from the reaction vessel while the crystallization medium is recirculated through the irradiation cell in a continuous flow turning the crystallization mixture to the same vessel or collecting it in another vessel. Ultrasound device may also include more sophisticated modern system selected from but not limited to DISCUS (Dispersive Crystallization with Ultrasound), SAX (Solution Atomization Crystallization) or PRT (Ultrasonic Particle Rounding). Auxiliary equipment may include pipe system, pumps, vessels, devices for monitoring of the process and measuring various physical parameters.

Preparation of crystallization mixture may include different regimes of dissolving of the chemical compound in question in a solvent, such as dissolving in prepared mixtures or step-by-step or continuous addition of particular solvents in a particular time regime, filtration of unwanted solid particles, different temperatures of dissolving process and temperatures of particular components at the moment of mixing. If the starting mixture is a solution it is preferably to avoid seeds of crystals before the nucleation starts, so the preparation of the crystallization mixture should be led on such way that the seeds would be excluded. The "preseeds" may influence the nucleation process and may cause the crystallization process to be less controlled and less repeatable.

Choosing an appropriate concentration means to define solvent/chemical compound (v/w) ratio which may influence yield, assay of impurities and design of the further process of this invention in view of defining particles size and residual solvents.

Defining the solvent regime or temperature regime depends on the type of crystallization, particularly in view the respective type of crystallization of
- thermal (re)crystallisation
- solvent/antisolvent precipitation
- pH dependent crystallisation.

In thermal (re)crystallisation the precipitation is caused by cooling the mixture while solvent ratio is usually fixed. The nucleation zone is defined by temperature interval and is a metastable condition. In this zone the solution becomes supersaturated with regard to the chemical compound of interest, and first nuclei of particles appear. Depending on degree of supersaturation the temperature of first nuclei appearance may vary inside the metastable zone from experiment to experiment. Ultrasonic irradiation influences this temperature, number of nuclei and the velocity of their creation and growth. The temperature regime is defined by the starting temperature, the cooling regimes before the nucleation, during the nucleation and after the nucleation respectively and by the final temperature at which the product is digested and isolated. The cooling regime is defined as a rate of cooling expressed in degrees per time unit and the rate may vary in particular parts of the process or particular temperature intervals.

In solvent/antisolvent precipitation the precipitation is caused by adding antisolvent to solvent while temperature is usually fixed. The nucleation zone, which is a metastable condition, is defined by solvent/antisolvent ratio interval and overall solvent volume. Ultrasonic irradiation influences this ratio, number of nuclei and the velocity of their creation and growth. The antisolvent addition regime is defined by starting solvent/antisolvent ratio, the rate of antisolvent addition before the nucleation, the rate of antisolvent addition during the nucleation, the rate of antisolvent addition after the nucleation and by the final solvent/antisolvent ratio. The solvent can be one-component or multi-component and may be partially diluted by antisolvent in the starting mixture. Antisolvent is preferably, but not limited to one-component.

It is possible to combine both methods - changing temperature and solvent/antisolvent ratio during the process of sonocrystallisation. Preferably it is beneficial after nucleation period. It is possible to add an additional solvent in the final stage of thermal crystallization to reach special benefits, for example, better yields, different particle size or shape. It is possible to cool the suspension after the addition of antisolvent or in the final stage of antisolvent adding in order to reach special benefits, for example, better yields, different particle size or shape.

In pH dependent crystallisation the precipitation is caused by adding solution of a neutralisation agent while temperature is usually fixed. The nucleation zone, which is a metastable condition is defined by pH interval and overall solvent volume. Ultrasonic irradiation influences this ratio, number of nuclei and the velocity of their creation and growth. If the chemical compound of interest is an acid the neutralization agent is a base, preferably selected from alkali or earth alkali hydroxides. If the chemical compound of interest is a base the neutralization agent is an acid, preferably selected from mineral acids and more preferably selected from hydrohalic, sulphuric and phosphoric acids. If the pH dependent crystallisation is designed as a production of a salt of the chemical compound of interest, the neutralization agent is an appropriate counterion generating substance, preferably selected from acceptable mineral acids, organic carboxylic or sulfonic acids if the chemical compound of interest is a base, or from acceptable metal or ammonium cation generating molecules if the chemical compound of interest is an acid. The neutralization agent addition regime is defined by starting pH, solvent medium, temperature, the rate of neutralisation before the nucleation, the rate of neutralisation during the nucleation, the rate of neutralisation after the nucleation and the final pH.

It is possible to combine the pH dependent crystallisation by changing temperature and/or by a new solvent addition during the process of sonocrystallisation. Preferably it is beneficial after nucleation period, most preferably in the final stage to reach special benefits, for example, better yields, different particle size or shape.

The process of reduction of residual solvent in the final product is also not limited to have a solution as starting mixture. It is possible to achieve the benefits of the invention also by ultrasonic irradiation of suspension of product in a liquid medium. Such process can be classified as a peculiar wet milling process, and it may reduce a critical residual solvent by digesting in the same or another solvent more efficiently by ultrasonic irradiation.

The compound, or mixture thereof, selected from active pharmaceutical ingredients is not limited to the one exemplified in the experiments as olmesartan medoxomil. Any such active pharmaceutical ingredient or chemical compound in general which is treated by ultrasound during the precipitative physical methods of preparation according to this invention as disclosed herein, can be produced in a solid form with substantially diminished content of residual volatile compounds, and as such it can be incorporated into a further product such as a pharmaceutical composition. Pharmaceutical compositions can be in formulated in any form to support desired route of administration. For example the form can be suitable for enteral (peroral, rectal), topical (dermal, transdermal, sublingual, buccal, intravaginal, in the form of eye and ear drops), inhalational and parenteral (injectable, infusal) routes of administration. Pharmaceutical composition in accordance with this invention can be embodied for example in a form of a tablet, capsules, pellet, granule, powder, powder fillers of inhalational devices, spray, suppositorie, vaginal globule, grease, cream, paste, vial filler, parenteral solution or their combined form, or plurality thereof. Solid pharmaceutical compositions (dosage forms) can be shielded, for example coated with the aim of increasing palatability or regulating the disintegration or absorption.

Such composition may have, in addition to active pharmaceutical ingredient, at least one or more further components, depending upon the technological method used, the release rate desired and other factors. For example, composition of the present invention may contain inactive ingredients (excipients) which function for example as different fillers, binders, disintegrants, glidants, lubricants, antiadherents and excipients that enhance the absorption of drugs from gastrointestinal tract.

In order to give an example, in a special but not limiting embodiment the tablet may contain 10 - 40 mg of small particle size olmesartan medoxomil with substantially reduced volatile residuals according to the invention, optionally combining with a diuretic, such as hydrochlorothiazide or another antihypertensive such as amlodipine besilate, and excipients, preferably selected from various types of cellulose, derivatised celluloses, such as hydroxypropyl celluloses hydroxypropyl methyl celluloses, sugar fillers such as lactose, magnesium stearate, talc and pigments/dyes. Preferably the tablet is film coated.

Following examples further illustrate the invention. They are provided for illustrative purposes only and are not intended to limit in any way the invention.

### Reference example 1

### Preparation of crude chemical compound (olmesartan medoxomil)

400 g (0.5 mol) of trityl olmesartan medoxomil (commercial intermediate) and 1.9 L of 48 % hydrobromic acid is added to the suspension. After stirring the reaction mixture for 2 hours 4 L of water is added. The precipitated triphenylmethanol is filtered off. Acetone is evaporated from the filtrate. The resulting concentrate is stirred at room temperature for 0.5 hour and for additional 1 hour at 0 °C. The precipitated olmesartan medoxomil hydrobromide is filtered off and dried in vacuum at room temperature overnight. The 260 g of the dried salt is suspended in 3.2 L of tetrahydrofuran and the mixture is vigorously stirred for 1 h at room temperature. It is filtered off and washed with a small amount of cold tetrahydrofuran. The wet filter cake is dissolved in 480 mL of a mixture of acetone and water (V / V = 1 / 2). A saturated aqueous NaHCO3 is added dropwise until pH of the solution is raised to 5.5. The formed suspension is stirred for 1 hour at room temperature and 1 hour at 0°C. The precipitate is filtered off and optionally dried to the constant weight (202 g).

### Reference example 2

### Recrystallisation of crude chemical compound (olmesartan medoxomil)

20 g of olmesartan medoxomil is suspended in 200 mL of acetonitrile in 1-L flask. The suspension is heated to the reflux temperature to become a solution, 200 ml of water is added and the mixture is gradually cooled while vigorous stirring with magnetic body to 0 °C, further stirred at 0 °C for 2 hours. The precipitate is filtered off and dried at 40 °C and 10 mbar for 48 h.

10 times larger volume is carried out in 10-L reactor with mechanical stirring.

The products are analysed to particle size and acetonitrile assay and the range of results is shown Table 4.

### Reference example 3

### Recrystallisation of crude chemical compound (olmesartan medoxomil)

20 g of olmesartan medoxomil is suspended in 200 ml of acetonitrile in 1-L reactor. The suspension is heated to the reflux temperature to become a solution, 200 mL of water is added and the mixture is gradually cooled while vigorous stirring with mechanical stirrer to 0 °C, and further stirred at 0 °C for 1 hour. The precipitate is filtered off and dried at 40 °C and 10 mbar primarily for 24 h. In one option the product is further additionally dried for twice for 24 h, in another option it is micronised and then dried for 48 h.

The products are sampled in each step and analyzed to particle size and acetonitrile assay and results are shown Table 5, rows 3 to 5.

### Reference example 4

### Recrystallisation of crude chemical compound (olmesartan medoxomil)

5 g of olmesartan medoxomil is suspended in 50 mL of acetonitrile in 250-mL flask. The suspension is heated to the reflux temperature to become a solution, 50 ml of water is added and the mixture is gradually cooled while stirring with magnetic body to 25 °C. The mixture is further stirred at 25 °C or optionally to 0 °C for one hour, the precipitate is filtered off and dried at 40 °C and 10 mbar for 24 h. The product is analysed to particle size and acetonitrile assay and results are shown Table 6, rows 1 and 2.

### Reference example 5

### Recrystallisation of crude chemical compound (olmesartan medoxomil)

5 g of olmesartan medoxomil is suspended in 50 mL of acetonitrile in 250-mL reactor. The suspension is heated to the reflux temperature to become a solution, 50 ml of water is added and the mixture is gradually cooled while stirring with a mechanical stirrer at various revolutions to 0 °C. The mixture is further stirred at 25 °C or optionally to 0 °C for one hour, the precipitate is filtered off and dried at 40 °C and 10 mbar for 24 h.

The product is analysed to particle size and acetonitrile assay and results are shown Table 6, rows 3 to 5.

### Experimental recrystallisations of crude chemical compound (olmesartan medoxomil) according to invention:

### Example 1

### Laboratory test of cold ultrasonic treatment and solvent removal efficiency

5 g of dried crude olmesartan medoxomil is suspended in 50 mL of acetonitrile in 250-mL flask. The suspension is heated to the reflux temperature to become a solution, 50 ml of water is added and the mixture is gradually cooled while stirring with magnetic body to 25 °C. Ultrasound was applied for 1 hour at 25 °C, during cooling to 0 °C and for 1 hour at 0 °C (Hielscher UP200S™ with 50 % amplitude). The precipitate is filtered off and dried at 40 °C under 10 mbar for 24 h. Additional 24 h drying at temperatures 40 °C, 50 °C or 60 °C was also tested.

The product is sampled at each step, analyzed to particle size and acetonitrile assay and results are shown Table 5, rows 1 and 2.

### Example 2

### Laboratory test of warm ultrasonic treatment

5 g of dried crude olmesartan medoxomil is suspended in 50 mL of acetonitrile in 250-mL flask. The suspension is heated to the reflux temperature to become a solution, 50 ml of water is added and the mixture was allowed to cool to 50 °C. Ultrasound was applied for 1 hour at 50 °C, during cooling to 25 °C and for 1 hour at 25 °C (Hielscher UP200S™ with 50 % amplitude). The resulting solid (precipitate) is filtered off and dried at 40 °C under 10 mbar for 24 h.

The product has particle size 28 µm and acetonitrile assay 486 ppm.

### Example 3

### Lab test of different protocols of ultrasonic treatment

5 g of dried crude olmesartan medoxomil is suspended in 50 mL of acetonitrile in 250-mL flask. The suspension is heated to the reflux temperature to become a solution, 50 ml of water is added and the mixture is gradually cooled. The mixture is then treated by ultrasound with dipped probe Hielscher UP200S™ with or without external stirring, with different amplitude of ultrasound power, with different cycle, and with different regime of cooling (spontaneous or by temperature control). The precipitate is filtered off and dried at 40 °C under 10 mbar for 24 h.

Experimental parameters and results of particles size and acetonitrile assay analysis are shown in Table 6, row 6 to 12.

Cycle 1 means continuous treatment, cycle 0.5 means 0.5 s of action and 0.5 s of pause, cycle 0.25 means 0.25 s of action and 0.75 s of pause.

### Example 4

### Use of ultrasonic flow-cell, observation test

2.0 kg of crude olmesartan medoxomil is suspended in 20 L of acetonitrile in a reactor, equipped by recirculation through Prosonitron™ PX1120a flow-cell. The suspension is heated to 80 °C to become a solution and 20 L of water was added. Consequently temperature droped to 45 °C and the mixture was reheated to 65 °C to become clear again. While the recirculation line (15 L loop, 2 m³/h) was filled additional temperature drop was observed and the mixture was reheated to 65 °C. Afterwards the cooling rate was set to - 24°C/hour and ultrasound was applied continuously at 2×150 W from 65 °C to 25 °C. The mixture is continuously monitored in view of crystal formation and temperature changing. It was discovered that a nucleation assisted by ultrasound, and a slight rise of temperature appear at temperature interval 35 - 39 °C, what is identified as a metastable zone. The mixture is finally treated by ultrasound at 25 °C for additional 60 minutes. The precipitate is filtered off and dried at 55 °C under 10 mbar for 15 h.

Particle size distribution is observed by FBRM Lasentec™ probe just before filtration, acetonitrile assay is analyzed after drying. Results are shown in Table 7, row 1. The protocol of for ultrasonic treatment is shown in Scheme 2 below.

It is found that ultrasonic treatment efficiently reduces particle size, but a reagglomeration of particles is detected as soon as ultrasonic treatment stops which diminishes the efficiency of solvent removal.

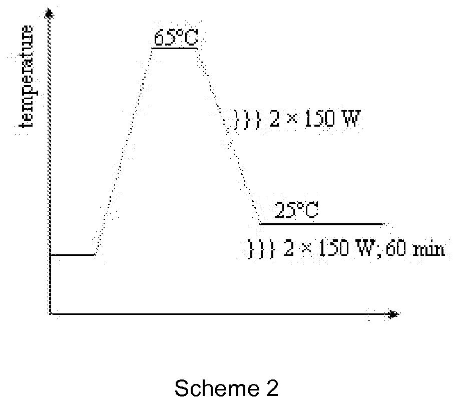

### Example 5

### Use of ultrasonic flow-cell, reagglomeration test

2.0 kg of dried crude olmesartan medoxomil is suspended in 20 L of acetonitrile in a reactor, equipped by recirculation through Prosonitron™ PX1120a flow-cell. The suspension is heated to 80 °C to become a solution and 20 L of water was added very slowly while the recirculation line was filled (15 L loop, 2 m³/h). Temperature does not fall bellow 65 °C. The cooling rate was set to -23 °C/hour and the ultrasound was applied continuously at 2 × 150 W from 65 °C to 37 °C. The slurry was stirred at 37 °C for 20 minutes in the absence of ultrasound. The cooling rate was then set to -12°C/hour and the ultrasound was applied continuously at 2 × 150 W from 37 °C to 25 °C and 1 hour at 25 °C. The precipitate was filtered and dried at and 55 °C under 10 mbar for 15 h.

Particle size distribution is observed by FBRM Lasentec™ probe at 37 °C and just before filtration, acetonitrile assay is analyzed after drying. Particle size distribution shows at least 20 % higher values in final product before filtering in comparison to particle size distribution after 37 °C period stirring. Results on final product are shown in Table 7, row 2. The protocol for ultrasonic treatment is shown in Scheme 3.

A reagglomeration at 25 °C is therefore confirmed.

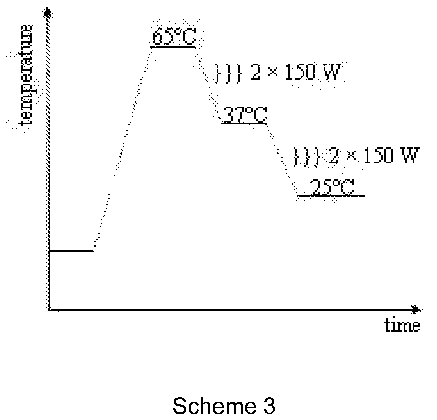

### Example 6

### Use of ultrasonic flow-cell, reagglomeration test

2.0 kg of wet crude olmesartan medoxomil is suspended in 4 L of mixture of acetonitrile/water 1:1 in a reactor, equipped by recirculation through Prosonitron™ PX1120a flow-cell, the suspension is heated to 80 °C to achieve full dissolution. The resulting solution was cooled to 65 °C and stirred at that temperature for 20 minutes while the recirculation line was filled (15 L loop, 2 m³/h). The cooling rate was set to -20 °C/hour and the ultrasound was applied in the temperature intervals from 60 °C to 50 °C and from 40 °C - 30 °C at 2 × 150 W (Scheme 4). The mixture is sampled and further stirred at 0 °C for 2 h. The precipitate is filtered off and dried at 55 °C under 10 mbar for 15 h.

Particle size distribution is observed by FBRM Lasentec™ probe at 0 °C before and after stirring, acetonitrile assay is analysed after drying. Particle size distribution of both samples are shown in Figure 2, the left curve represent the sample before stirring the right one the sample after stirring for 2 h.

Results on final product are shown in Table 7, row 3.

The test shows an extensive reagglomeration during stirring at 0 °C.

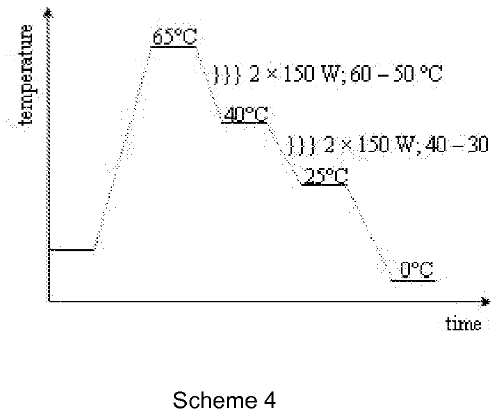

### Example 7

Use of ultrasonic flow-cell, rebreaking of agglomerates

The example 6 is repeated with exception that ultrasonic treatment between 40 and 30 °C is missed and introduced during treatment of the slurry at 0 °C for 2 h (see Scheme 6). The precipitate is filtered off and dried at 55 °C under 10 mbar for 15 h.

Particle size distribution is observed by FBRM Lasentec™ probe at 0 °C before and after ultrasonic treatment, acetonitrile assay is analyzed after drying. Particle size distribution of both samples is diminished from 55 to 35 µm during "wet milling" at 0 °C.

Results on final product are shown in Table 7, row 4.

The test shows that agglomerates can be successfully broken, but this does not influence to acetonitrile removal.

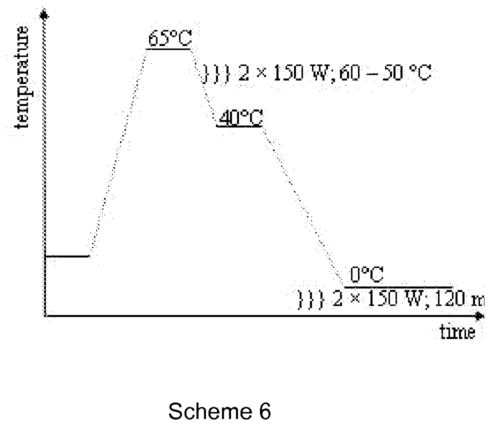

### Example 8

Use of ultrasonic flow-cell, trial to reduce residual acetonitrile

The example 6 is repeated by different protocols of ultrasonic treatment (see Schemes 7-9) temperatures of treatment, cooling regime, durations of treatment and power of ultrasonic irradiation.

Results on final product are shown in Table 7, row 5-7.

The test shows reduced particle size, but no advantage in acetonitrile removal which is inferior in comparison to laboratory results.

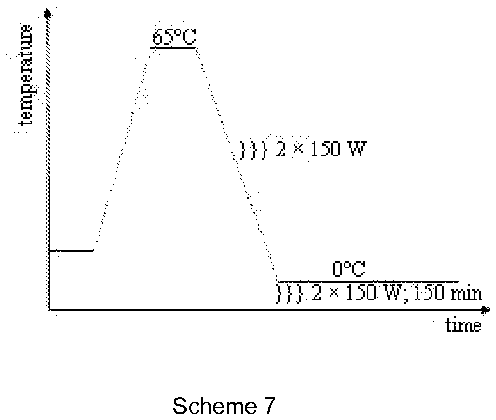

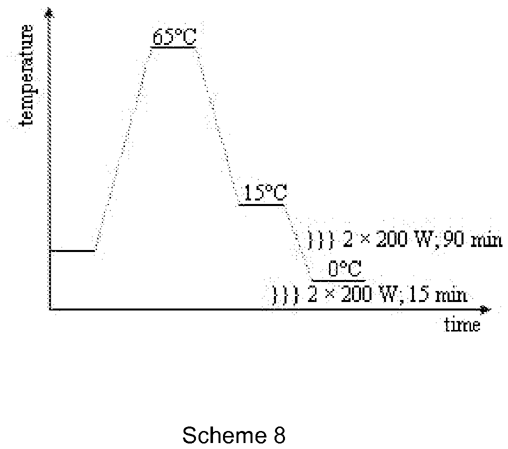

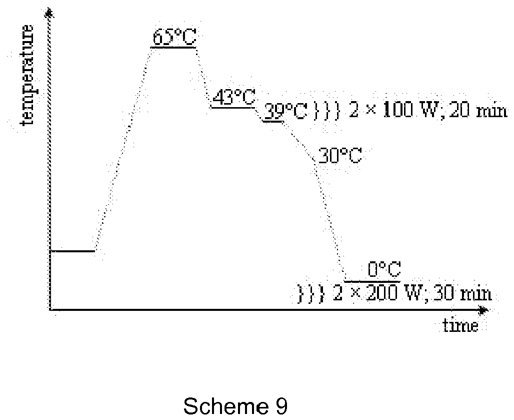

### Example 9

### Use of ultrasonic flow-cell, trial to reduce residual acetonitrile

The protocol is improved by the manner of preparing starting solution as described in examples 4 and 5 and by using dried crude olmesartan medoxomil. Thus:

2.0 kg of crude olmesartan medoxomil is suspended in 20 L of acetonitrile in a reactor, equipped with Prosonitron™ PX1120a flow-cell (Picture 1). The suspension is heated to 80 °C to become a solution, 20 L of water was added. The resulting mixture was stirred, while the recirculation line was filled (15 L loop, 2 m³/h) A slight turbidity is observed, but essentially weaker than in experiments with wet starting material. The mixture is reheated to 65 °C to become clear again. The cooling rate was set to reach 0 °C in 4 hours and ultrasound was applied continuously at 2 × 200 W. The slurry was then stirred at 0 °C for additional 150 minutes while ultrasound was applied continuously at 2 × 200 W. The precipitate is filtered off and dried at 55 °C under 10 mbar for 15 h.

Ultrasonic protocol used in the experiment is shown in Scheme 10. Results on final product are shown in Table 7, row 8 and essential reduction of acetonitrile assay in comparison to examples 5-7 is observed.

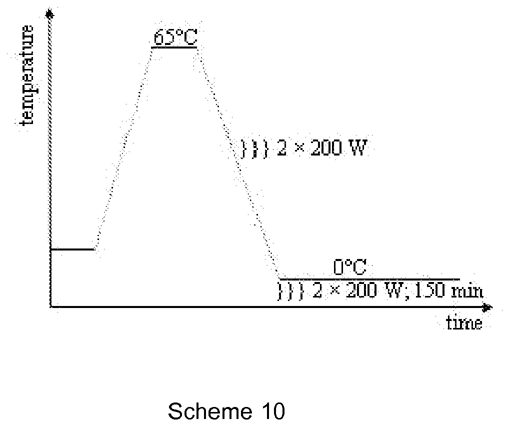

### Example 10

### Use of ultrasonic flow-cell, trial to reduce residual acetonitrile

The Example 9 is repeated by employing smaller recirculation loop and changed ultrasonic treatment protocol (Scheme 11). Smaller loop guarantees more efficient stirring and better temperature control. Thus:

2.0 kg of crude olmesartan medoxomil is suspended in 20 L of acetonitrile in a reactor, equipped with Prosonitron™ PX1120a flow-cell. The suspension is heated to 80 °C to become a solution, 20 L of water is added, and the recirculation line was filled (10 L loop, 2 m³/h). Temperature of the mixture falls to 43 °C, and a slight turbidity is observed. Reaction mixture is reheated to 65 °C to become clear again. The cooling rate was set to reach 25 °C in 4 h. Turbidity appeared at 43 °C with massive crystallisation to 37 °C. At 25 °C the slurry is continuously treated by ultrasound (power 2 x 150 W) for 45 minutes and during cooling to 0°C. At 0 °C slurry was stirred for additional hour while ultrasound was applied continuously at of 2 x 200 W. The precipitate is filtered off and dried 55 °C under 10 mbar for 15 h, sampled and additionally dried for additional 24 h at same conditions.

Results on final product (Table 7, row 9) and essential reduction of acetonitrile assay in comparison to Example 9 which could be further lowered by additional drying (Table 7, row 10) was observed.

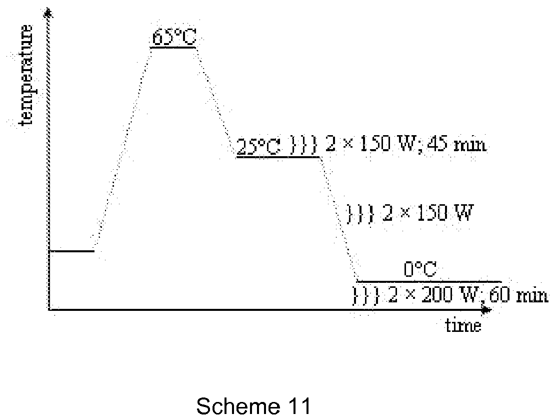

### Example 11

### Use of ultrasonic flow-cell, trial to reduce residual acetonitrile

The Example 10 is repeated with improvement of very slow water addition in two portions and additional ultrasonic treatment during cooling inside the nucleation zone.

2.0 kg of crude olmesartan medoxomil is suspended in 20 L of acetonitrile in a reactor, equipped by with Prosonitron™ PX1120a flow-cell. The suspension is heated to 80 °C to become a solution, 10 L of water is slowly added not allowing the mixture to be cooled bellow 43 °C, and the recirculation line filled (10 L loop, 2 m³/h). No turbidity was observed during this operation. Temperature is repaired by rise from 5-10 °C and additional crop of 10 L of water is added by the same manner. After addition the solution is let to cool to 40 °C. Ultrasound was applied in the temperature interval from 40 °C to 37 °C continuously at 2 × 150 W. The slurry was then cooled in the absence of ultrasound from 37 °C to 25 °C, and stirred at 25 °C for 45 minutes while ultrasound was applied continuously at 2 × 150 W. Afterwards the slurry was cooled 0°C and the ultrasound was applied continuously from 25 °C to 0 °C. Ultrasound was applied continuously at 2 × 200 W for 1 hour at 0 °C The precipitate is filtered off and dried at 55 °C under 10 mbar for 15 h, sampled and additionally dried for 24 h at same conditions.

Ultrasonic treatment protocol is shown in Scheme 12.

Results on final product are shown in Table 7, row 11. An additional reduction of acetonitrile assay in comparison to Example 10 which could be further lowered by additional drying is shown.

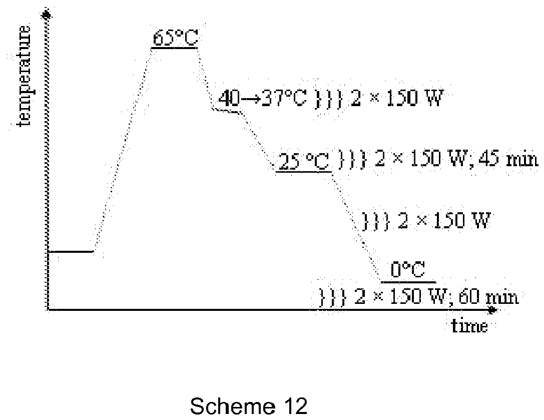

### Example 12

### Use of ultrasonic flow-cell, trial to reduce residual acetonitrile

The Example 11 is repeated with improvement of hot water addition

2.0 kg of crude olmesartan medoxomil is suspended in 20 L of acetonitrile in a reactor, equipped by recirculation through Prosonitron™ PX1120a flow-cell. The suspension is heated to 80 °C to become a solution, 20 L of water heated to 65 °C is added, and the recirculation line filled (10 L loop, 2 m³/h). Temperature of the mixture didn't drop bellow 50 °C and no turbidity appeared. After addition the solution is let to cool to 40 °C. Ultrasound was applied in the temperature interval from 40 °C to 37 °C continuously at 2 × 150 W. The slurry was then cooled in the absence of ultrasound from 37 °C to 25 °C, and stirred at 25 °C for 45 minutes while ultrasound was applied continuously at 2 × 150 W. Afterwards the slurry was cooled 0°C and the ultrasound was applied continuously from 25 °C to 0 °C. Ultrasound was applied continuously at 2 × 200 W for 1 hour at 0 °C. Precipitate is filtered off and dried at 55 °C under 10 mbar for 15 h, sampled and additionally dried for 24 h at same conditions.

Ultrasonic treatment protocol is shown in Scheme 12.

Results on final product are shown in Table 7, row 12. An additional reduction of acetonitrile assay in comparison to Example 11 which could be further lowered by additional drying is shown. The final product has assay of acetonitrile comparable to laboratory experiments and fits to ICH guidelines.

## Claims

1. A process for the preparation of solid chemical compound purified from residual solvent, the process comprising the steps of
a) use of said solvent or a mixture of said solvent for providing a solution of the chemical compound,
b) subjecting said solution of step a) to precipitation or crystallisation, including a precipitation or crystallisation phase during which the solution of the chemical compound is subjected to ultrasonic treatment, wherein solid precipitates or crystals of the chemical compound in the form of particles are obtained, c) separating or isolating solid precipitate or crystal particles from a liquid phase obtained from the solution treatment step b), and d) drying the separated or isolated solid precipitates or crystals.

2. The process according to claim 1, wherein the chemical compound had been optionally pre-dried prior to being provided in solution or suspension in step a).

3. The process according to claim 1 or 2, wherein step b) comprises
performing ultrasonic treatment during a nucleation phase when small precipitates or crystals start to be formed, and preferably further ultrasonic treatment is applied, optionally with intermediate period(s) when no ultrasonic treatment is (are) applied.

4. The process according to any one of the preceding claims, wherein the precipitation or crystallisation phase of step b) is caused or triggered by a technique selected from the group consisting of (i) cooling, (ii) addition of an antisolvent, (iii) changing pH, (iv) changing ion concentration, (v) addition of a complex ion, (vi) triggering polymerization; or any combination thereof, particularly any one of (ii) to (vi) combined with cooling.

5. The process according to any one of the preceding claims, comprising performing ultrasonic treatment at phases of:
during cooling from higher temperature status of the solution;
optionally during intermediately maintaining a temperature level between said higher temperature status and room temperature; and
during a phase of at least 5 minutes, more preferably at least 30 minutes, at low temperature below room temperature, preferably at a temperature below 10 °C, more preferably at a temperature below 5 °C,
optionally with intermediate absence of ultrasonic treatment during a part of a respective phase or between respective phases.

6. The process according to any one of the preceding claims, wherein step a) provides for a clear solution of the chemical compound in the solvent or solvent mixture prior to the precipitation or crystallisation phase, preferably wherein any undissolved solid particles is avoided or optionally removed prior to the nucleation phase.

7. The process according to any one of the preceding claims, wherein step b) includes thermal precipitation or crystallisation, and cooling is performed at a cooling rate of slower than -25 °C/h.

8. The process according to any one of the preceding claims, wherein the drying the solid precipitates or crystals is performed by conditions of one or more of (selected from)
(i) applying reduced pressure of 100 mbar or below, preferably 50 mbar or below, more preferably 20 mbar or below,
(ii) drying temperature of at least 20°C, and
(iii) drying time of at least 8 h, preferably at least 12 h, more at least 24 h.

9. The process according to any one of the preceding claims, wherein the chemical compound is an active pharmaceutical ingredient, yielding the chemical compound as crystalline material, or yielding the chemical compound as amorphous material.

10. The process according to any one of the preceding claims, wherein amount of residual solvent in the dried solid precipitate or crystal particles is reduced to a level of 750 ppm or lower, preferably 500 ppm or lower, more preferably 450 ppm or lower.

11. The process according to any one of the preceding claims, wherein the solvent is an organic solvent, and wherein the amount residual organic solvent is reduced to a maximal amount defined by ICH Q3C standard of the corresponding organic solvent.

12. The process according to any one of the preceding claims, wherein the chemical compound provided for step a) is a crude starting material, while the solid chemical compound in the final precipitate or crystal form has a purity of at least 99% (HPLC).

13. The process according to any one of the preceding claims, for the preparation of a scaled-up level of the chemical compound in amounts of at least 1 gram or at least 1 kilogram quantities, and/or wherein ten or tens to hundred or hundreds of liters of solvent or solvent mixture is used for step a).

14. A process for the preparation of solid chemical compound purified from residual solvent, the process comprising the steps of
a) use of said solvent or a mixture of said solvent for providing a suspension of the chemical compound,
b) subjecting said suspension of step a) to ultrasonic treatment during a period of at least 2 seconds, wherein the chemical compound is obtained in the form of particles,
c) separating or isolating solid particles from a liquid phase obtained from the solution treatment step b), and
d) drying the separated or isolated particles.

15. A process for preparing an active pharmaceutical ingredient or a pharmaceutical composition comprising the same, the process comprising the steps of:
carrying out a process according to any one of the preceding claims, wherein the active pharmaceutical ingredient is said solid chemical compound, and
optionally mixing the obtained, dried solid precipitates, crystals or particles with at least one pharmaceutically acceptable excipient to obtain a pharmaceutical composition.

16. Use of an ultrasonic treatment for reducing residual solvent present in a solid chemical material.

17. Use according to claim 16, wherein solid chemical material is a crystalline or an amorphous active pharmaceutical ingredient.
